(19) Europäisches Patentamt / European Patent Office / Office européen des brevets

(11) **EP 3 070 641 B1**

(12) **EUROPEAN PATENT SPECIFICATION**

(45) Date of publication and mention of the grant of the patent:
**24.11.2021 Bulletin 2021/47**

(51) Int Cl.:
**G06K 9/00** *(2006.01)*    **G01B 11/25** *(2006.01)*
**G01C 15/00** *(2006.01)*    **G06T 17/00** *(2006.01)*

(21) Application number: **16158629.2**

(22) Date of filing: **04.03.2016**

(54) **VEHICLE BODY WITH IMAGING SYSTEM AND OBJECT DETECTION METHOD**

FAHRZEUGKÖRPER MIT EINEM ABBILDUNGSSYSTEM UND OBJEKTERKENNUNGSVERFAHREN

CORPS DE VÉHICULE AVEC UN SYSTÈME D'IMAGERIE ET PROCÉDÉ DE DÉTECTION D'OBJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2015 JP 2015047963**
        **21.01.2016 JP 2016009433**

(43) Date of publication of application:
**21.09.2016 Bulletin 2016/38**

(73) Proprietor: **Ricoh Company, Ltd.**
**Tokyo 143-8555 (JP)**

(72) Inventors:
• **SEKIGUCHI, Hiroyoshi**
**Tokyo 143-8555 (JP)**

• **WATANABE, Eita**
**Tokyo 143-8555 (JP)**

(74) Representative: **SSM Sandmair Patentanwälte Rechtsanwalt Partnerschaft mbB Joseph-Wild-Straße 20 81829 München (DE)**

(56) References cited:
**JP-A- 2014 004 913**    **JP-A- 2014 010 917**
**US-A1- 2010 259 598**    **US-A1- 2011 026 773**
**US-A1- 2012 176 380**    **US-A1- 2014 028 805**
**US-A1- 2014 376 003**    **US-B1- 6 709 116**

• **None**

## Description

BACKGROUND OF THE INVENTION

1. Field of the Invention

The present invention relates to a vehicle main body with an imaging system and an object detection method including a step of projecting light.

2. Description of the Related Art

In recent years, technologies of detecting object information, such as whether there is an object, the distance to the object, etc., are actively being developed.

For example, Patent Document 1 discloses a technology of projecting patterned light from a pattern lighting equipment; capturing an image of an object, which is irradiated with the patterned light, using a compound eye imaging device; and obtaining an image effective for detecting object information.

However, by the technology disclosed in Patent Document 1, when the imaging device is installed in a movable body, it has not bee possible to obtain an image that is effective for detecting object information while avoiding a decrease in the visibility.

Patent Document 1: Japanese Laid-Open Patent Publication No. 2013-190394

US 2011/026773 A1 discloses a technique which can improve the precision of a matching point search with a plurality of images taking the same object where distant and near views coexist. A plurality of first images obtained by time-sequentially imaging an object from a first viewpoint, and a plurality of second images obtained by time-sequentially imaging the object from a second viewpoint, are obtained. Reference regions including a reference point are set respectively in the first images with the same arrangement, and comparison regions corresponding to the form of the reference regions are set respectively in the second images with the same arrangement.; One reference distribution of pixel values about two-or-more-dimensional space is generated from the distributions of pixel values about the plurality of reference regions, and one comparison distribution of pixel values about two-or-more-dimensional space is generated from the distributions of pixel values about the plurality of comparison regions. Then, a matching point in the plurality of second images that corresponds to the reference point is detected by using the reference distribution of pixel values and the comparison distribution of pixel values.

US 2014/028805 A1 discloses a method of determining three-dimensional coordinates of an object surface with a laser tracker and structured light scanner. The method includes providing the scanner having a body, a pair of cameras, a projector, and a processor. The projector and cameras are positioned in a non-collinear arrangement. The projector is configured to project a first pattern onto the surface. The method also includes providing the tracker which emits a beam of light onto the retroreflector. The tracker receives a reflected beam of light. The first location is measured with the tracker. The first orientation is measured with the tracker. The first surface pattern is projected onto the surface. A pair of images of the surface pattern is acquired with cameras. The processor determines the 3D coordinates of a first plurality of points in the tracker frame of reference based in part on epipolar constraints of the cameras and projector.

US 2012/176380 A1 discloses a method for determining a three-dimensional model for a scene comprising: projecting a sequence of binary illumination patterns onto a scene; capturing a sequence of binary pattern images of the scene from a plurality of capture directions; projecting a sequence of periodic grayscale illumination patterns onto the scene, each periodic grayscale pattern having the same frequency and a different phase; capturing a sequence of grayscale pattern images from the plurality of capture directions; determining a range map for each capture direction by analyzing the captured binary pattern images and the captured grayscale pattern images; and determining the three-dimensional model for the scene responsive to the range maps determined for each capture direction.

US 6 709 116 B1 discloses a method adapting an output image to a shape of a display surface. First, a structured pattern is projected onto the display surface by a projector. An input image of the structured pattern is acquired by a camera in a fixed physical relationship to the projector. From the input image, a mesh of the structured pattern is determined in a coordinate frame of the projector. Coordinates of a texture are determined in the coordinate frame of the projector. The coordinates of the texture are updated according to the display region. The texture then mapped to the mesh, and the textured mesh is rendered on the display surface.

US 2014/376003 A1 discloses an arrangement for optically measuring the surface of an optionally glossy target object, includes: a diffusive, semi-transparent illumination structure defining a hollow surface shape configured to surround the target object at least partially, the surface being further provided with at least two apertures, a number of light sources optically coupled to the diffusive illumination structure for illuminating the target object via the surface of the illumination structure, at least two imaging devices, each configured to image the target object via an aperture, and a control entity configured to instruct the number of light sources to form a sequence of predetermined illumination patterns illuminating the target object, to instruct the at least two imaging devices to obtain an image of the target object relative to each illumination pattern, and to derive, through the utilization of the patterns utilized and images obtained, a predetermined surface-related property of the target object.

US 2010/259598 A1 discloses a three-dimensional distance detecting apparatus includes a stereo vision camera configured to detect a parallax of a selected point to be detected; and a pattern generating device configured to generate a pattern and project the pattern on the selected point when the selected point is a subject which does not induce a parallax.

SUMMARY OF THE INVENTION

The scope of the invention is defined by the appended claims. Any reference to "embodiment(s)", "example(s)" or "aspect(s) of the invention" in this description not falling under the scope of the claims should be interpreted as illustrative example(s) for understanding the invention.

BRIEF DESCRIPTION OF THE DRAWINGS

Other objects, features and advantages of the present invention will become more apparent from the following detailed description when read in conjunction with the accompanying drawings, in which:

FIG. 1 is a plan view of a vehicle provided with a movable body control system according to an embodiment of the present invention;
FIG. 2A is a side view of the vehicle provided with the movable body control system and FIG. 2B is a front view of the vehicle provided with the movable body control system;
FIG. 3 is a perspective view of a stereo camera of the movable body control system;
FIG. 4 illustrates an example of a random patterned light;
FIG. 5 is a hardware block diagram of the movable body control system;
FIG. 6 is for describing a parallax image generating unit of an image processing unit;
FIG. 7 is for describing a case of eight directions of propagation;
FIG. 8 is for describing a decimal parallax by sub-pixel estimation;
FIG. 9 is for describing the principle of deriving the distance from the stereo camera to an object;
FIG. 10A illustrates a reference image, FIG. 10B illustrates a high-density parallax image with respect to FIG. 10A, and FIG. 10C is a conceptual diagram indicating an edge parallax image with respect to FIG. 10A;
FIG. 11A is a conceptual diagram of a reference pixel in the reference image, and FIG. 11B is a conceptual diagram of the calculation of the shift amount while sequentially shifting the candidate corresponding pixel in the comparative image with respect to the reference image of FIG. 11A;
FIG. 12 is a graph indicating the cost value of each shift amount;
FIG. 13 is a conceptual diagram of deriving a synthesis cost value;
FIG. 14 is a graph of synthesis cost values of the respective parallax values;
FIG. 15 is a flowchart of a light projection control process 1 performed by an object detection device according to an embodiment;
FIG. 16 is a flowchart of a parallax image generating process;
FIG. 17 is a flowchart of a light-on-time parallax image generating process 1;
FIG. 18 is a timing chart of a light-on-time parallax image generating process 1;
FIG. 19 is a hardware block diagram of the movable body control system according to a modified example;
FIG. 20 is a flowchart of a light projection control process 2 performed in the object detection device according to the modified example;
FIG. 21 is a flowchart of a light-on-time parallax image generating process 2;
FIG. 22 is a timing chart of a light-on-time parallax image generating process 2;
FIGS. 23A and 23B are timing charts of other examples of the light-on-time parallax image generating process; and
FIGS. 24A and 24B are timing charts of other examples of the light-on-time parallax image generating process.

DETAILED DESCRIPTION OF THE PREFERRED EMBODIMENTS

Embodiments of the present invention will be described with reference to the accompanying drawings.

[Overview]

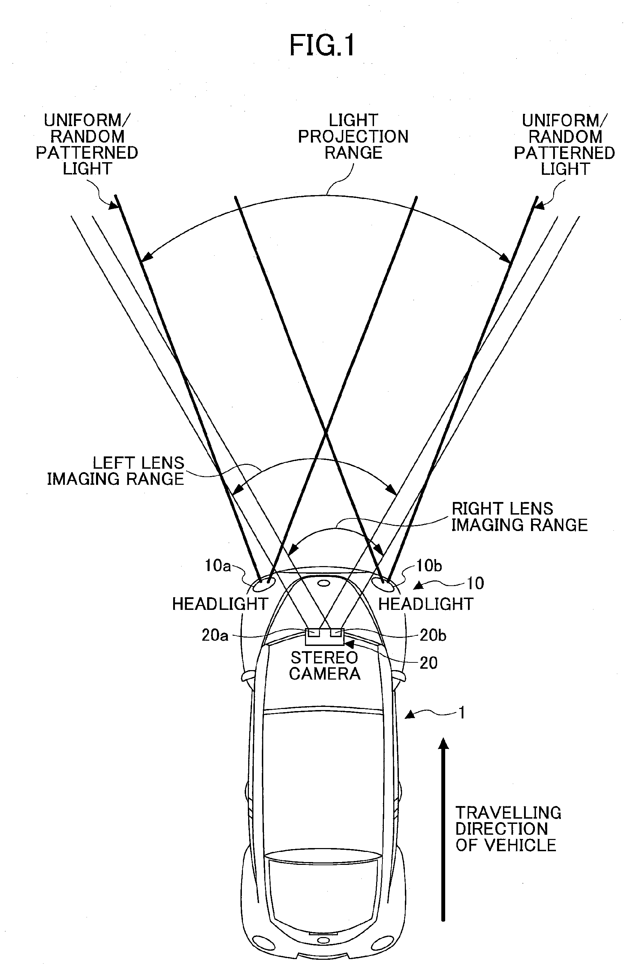

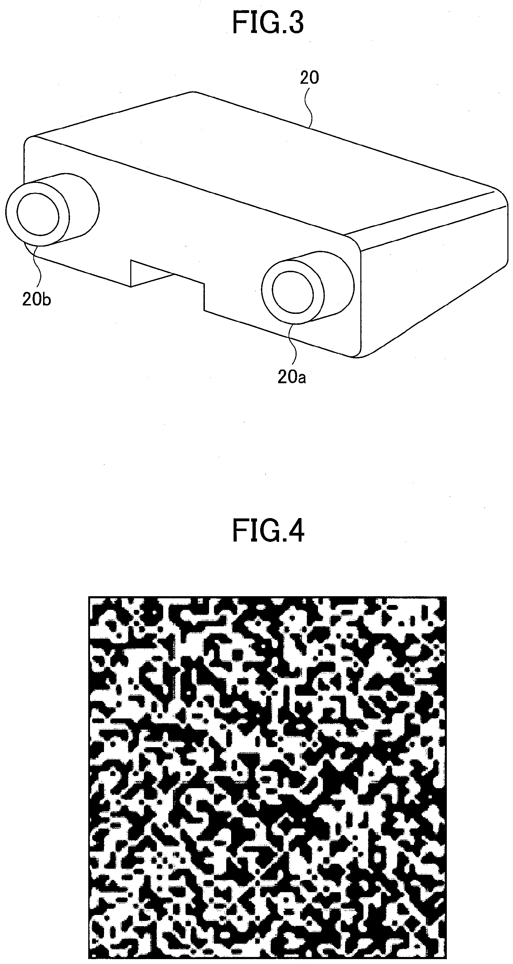

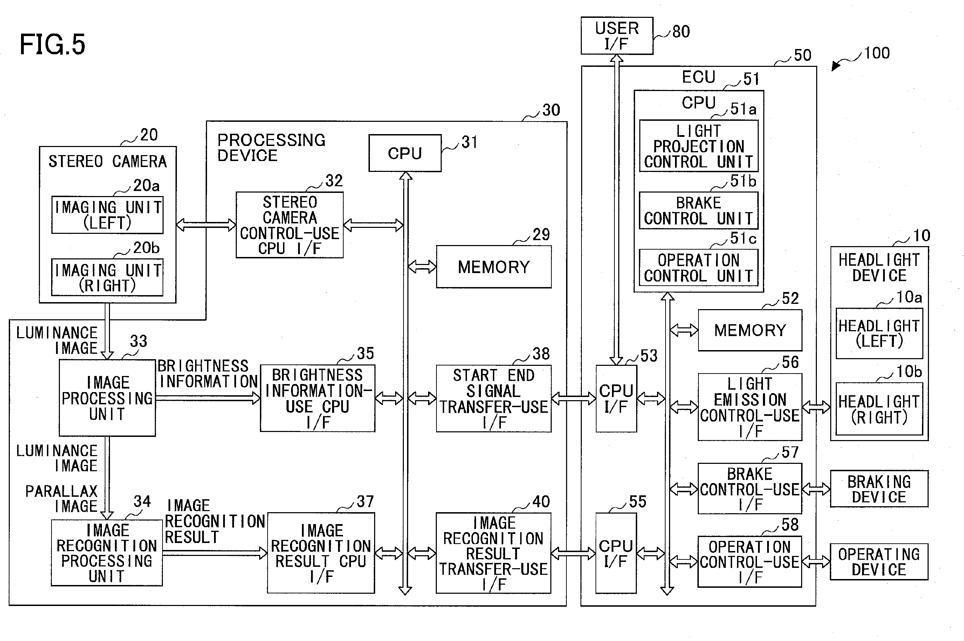

A movable body control system 100 according to an embodiment is installed in a vehicle main body (movable body) of a vehicle 1 that is a movable body device, and includes a headlight device 10, a stereo camera 20 that is an imaging device (see FIG. 3), a processing device 30 (see FIG. 5), an ECU 50 that is an electronic control device (see FIG. 5), etc., as illustrated in FIGS. 1 through 2B. Here, the movable body control system 100 is supplied with power from a battery of the electrical system of the vehicle 1.

Note that examples of the vehicle main unit, which is a movable body, are an automobile, an electric train, a motor cycle, a bicycle, a wheelchair, a cultivator used for agriculture, etc. Furthermore, the movable body device including the movable body control system 100 and the movable body in which the movable body control system 100 is installed, is not limited to a vehicle; for example, the movable body device may be an airplane, a ship, etc.

The headlight device 10 includes a pair of left and right headlights 10a, 10b, which are provided at the front part of the vehicle main body. The headlights 10a, 10b are turned on or off at the same time. Here, the headlights 10a, 10b are included as standard equipment in the vehicle 1. In the following, when there is no need to distinguish between the headlight 10a and the headlight 10b, these are collectively referred to as a "headlight".

Each headlight includes, as a light source, an LED array in which a plurality of LEDs are arranged in an array, and a driving circuit for driving the LED array. Each headlight is controlled to be turned on or off by the ECU 50. Furthermore, the headlight can also be turned on and off by manually operating a headlight switch provided near the steering wheel of the vehicle 1. Note that the headlight may include, for example, a white light source as the light source, instead of the LED.

The light is projected from the headlight at the front of the vehicle, and when there is an object within the light projection range of the headlight device 10, the object is irradiated with the light. Here, the "light projection range" means the range (see FIG. 1) obtained by combining the ranges in which light can be projected from the respective headlights of the headlight device 10.

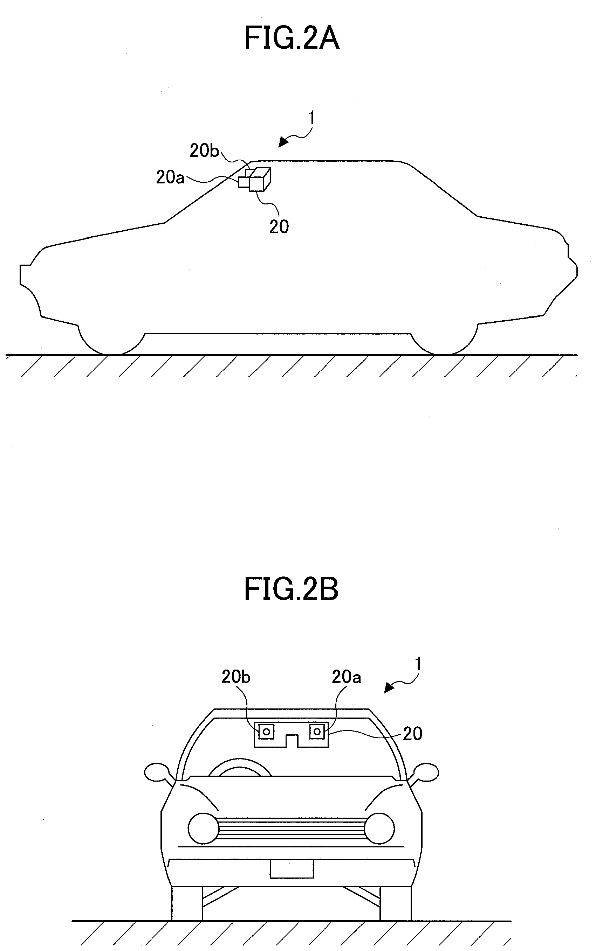

The stereo camera 20 is, for example, attached near the rear-view mirror, above the driver's seat inside the vehicle, as illustrated in FIGS. 2A and 2B. The stereo camera 20 is disposed so as to capture images in front of the vehicle with both lenses (left and right imaging units 20a, 20b). That is, the stereo camera 20 can capture images of an area within the light projection range of the headlight device 10. The left and right images (luminance images) captured with both lenses of the stereo camera 20 are sent to the processing device 30 in units of frames. The processing device 30 performs parallax calculation by using the left and right images from the stereo camera 20.

When the headlight device 10 is projecting light, an object (for example, a person, another vehicle, a structural object, a road, a tree, etc.) in the light projection range is irradiated with patterned light, and therefore the patterns of the patterned light are superimposed on (a texture is applied to) the object in the left and right images captured both lenses of the stereo camera 20.

As illustrated in FIG. 5, the processing device 30 includes a CPU 31, a memory 29, a stereo camera control-use CPU I/F 32, an image processing unit 33, an image recognition processing unit 34, a brightness information-use CPU I/F 35, an image recognition result CPU I/F 37, a start end signal transfer-use I/F 38, and an image recognition result transfer-use I/F 40.

The stereo camera control-use CPU I/F 32 is an interface used for transmitting and receiving data between the CPU 31 and the stereo camera 20. The CPU 31 implements imaging control of the stereo camera 20 via the stereo camera control-use CPU I/F 32.

The CPU 31 and the ECU 50 can transmit and receive data with each other via the start end signal transfer-use I/F 38.

The image processing unit 33 calculates brightness information from the left and right images (luminance images) from the stereo camera 20, and sends the brightness information to the CPU 31 via the brightness information-use CPU I/F 35. The CPU 31 sends the received brightness information to the ECU 50 via the brightness information-use CPU I/F 35.

Furthermore, the image processing unit 33 performs gamma correction and distortion correction on the left and right images captured by the stereo camera 20, and subsequently performs parallax calculation with the use of the left and right images (luminance images), and sends a parallax image and a luminance images to the image recognition processing unit 34.

The image recognition processing unit 34 recognizes (detects) object information, such as whether there is an object, the type of the object, the distance to the object, etc., based on the parallax image and the luminance images from the image processing unit 33, and sends an image recognition result, which is the result of the recognition, to the CPU 31 via the image recognition result CPU I/F 37. The CPU 31 sends the received image recognition result to the ECU 50 via the image recognition result transfer-use I/F 40.

That is, the processing results obtained at the image processing unit 33 and the image recognition processing unit 34 are sent to the CPU 31 of the processing device 30, corrected to have a data format that can be received by the ECU 50, and subsequently transferred to the ECU 50. Examples of the data format transferred to the ECU 50 are mainly CAN I/F, LIN I/F, etc.

The ECU 50 controls the headlight according to operations (ON/OFF) of the headlight switch by the driver, etc., and controls the braking device and the operating device of the vehicle 1, in addition to the headlight device 10, based on process information from the processing device 30.

The ECU 50 includes a CPU 51, a memory 52, a CPU I/F 53, a CPU I/F 55, a light emission control-use I/F 56, a brake control-use I/F 57, and an operation control-use I/F 58.

The CPU 51 includes a light projection control unit 51a for controlling the headlight device 10, a brake control unit 51b for controlling the braking device, and an operation control unit 51c for controlling the operating device.

The CPU 51 acquires brightness information from the CPU 31, via the start end signal transfer-use I/F 38 and the CPU I/F 53.

Furthermore, the CPU 51 acquires the image recognition result from the CPU 31 via the image recognition result transfer-use I/F 40 and the CPU I/F 55.

The brake control unit 51b and the operation control unit 51c acquires the image recognition result from the CPU 31, via the image recognition result transfer-use I/F 40 and the CPU I/F 55.

The brake control unit 51b implements control of the braking device (for example, automatic braking for avoiding danger), based on the acquired image recognition result.

The operation control unit 51c implements control of the operating device (for example, automatic steering for avoiding danger), based on the acquired image recognition result.

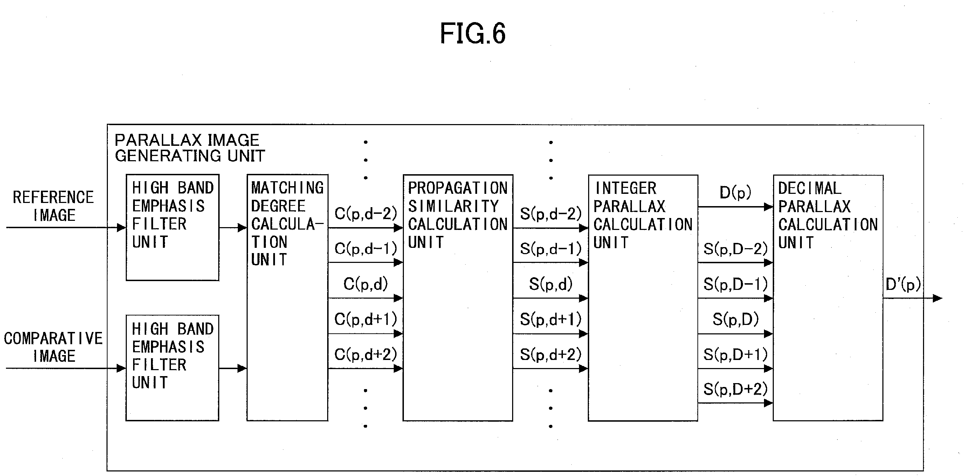

Next, a parallax calculation algorithm using the images captured by the stereo camera 20 is described with reference to FIGS. 6 through 8.

The image data items captured by the left and right imaging units of the stereo camera 20 are respectively subjected to gamma correction and distortion correction at a pre-processing unit of the image processing unit 33. On the left and right image data items that have undergone pre-processing, a parallax calculation algorithm is executed, at a parallax image generating unit (see FIG. 6), which is a post-processing unit of the image processing unit 33, and a parallax value is calculated for each of the pixels.

Incidentally, as a calculation method of generating a parallax image, a method may be used in which only the parallax for a part where texture is strong (a part where edge is strong) is calculated, such as Edge-Based matching (EBM). Alternatively, a method may be used in which the parallax of each of the pixels in the entire image is calculated by using a sub-pixel estimation method (fitting based on equal angle straight line, parabola, high-degree polynomial, etc.). Further, a method may be used in which the parallax of each of the pixels in the entire captured image is calculated by using a sub-pixel estimation method (fitting based on equal angle straight line, parabola, high-degree polynomial, etc.). Here, the term "sub-pixel estimation method" refers to a method of calculating decimal parallax based on integer parallax, which provides the minimum dissimilarity, and a parallax dissimilarity adjacent to the integer parallax, by propagating a matching dissimilarity from around each pixel by a recurrence formula like Semi-Global Matching (SGM).

Compared to EBM, SGM is preferable, because it is possible to suppress pixel defects in the parallax data.

Accordingly, the parallax image generating unit according to the present embodiment uses an SGM method, and for example, as illustrated in FIG. 6, the parallax image generating unit includes a high band emphasis filter unit with respect to a reference image, a high band emphasis filter unit with respect to a comparative image, a matching degree calculation unit, a propagation similarity calculation unit, an integer parallax calculation unit, and a decimal parallax calculation unit. Note that the SGM method is disclosed in non-patent document (Accurate and Efficient Stereo Processing by Semi-Global Matching and Mutual Information).

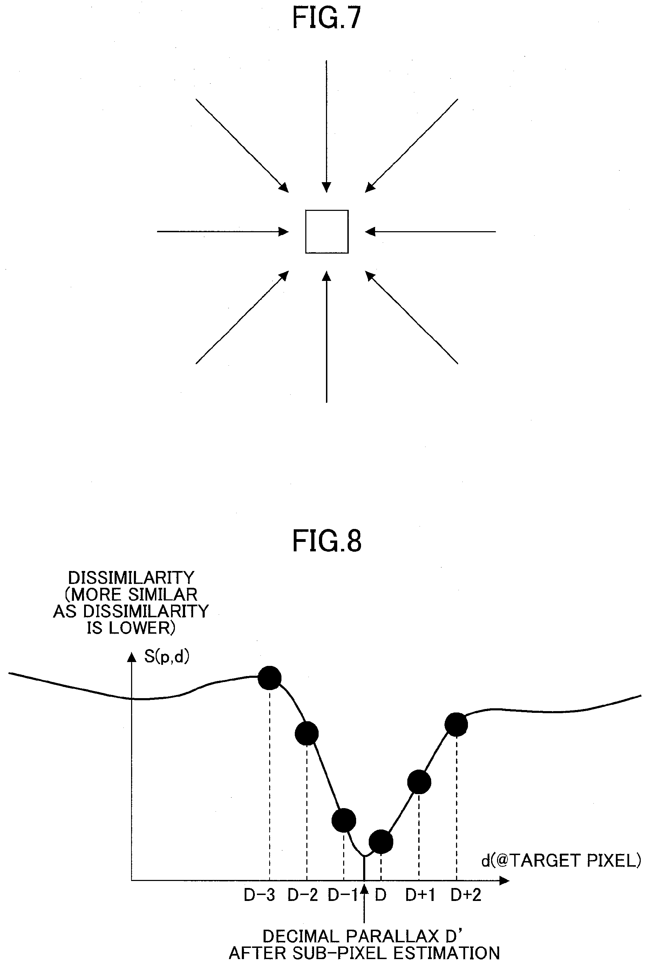

In the following, a parallax image generating unit according to the present embodiment is described. In SGM parallax calculation, as illustrated in FIG. 7, the dissimilarity is propagated from the respective directions of a target pixel for which the parallax is to be calculated (see formula (1) or formula (2)), and energy S, which is the sum of these dissimilarities (see formula (3)) is calculated, and an integer parallax D [pixel] that applies the minimum value of energy S is derived as the integer parallax of the target pixel. Here, C, which is expressed by formula (1) and formula (2), expresses the matching degree according to parallax searching in a comparative image for the target pixel of the reference image. As an example of C, another stereo matching index may be used, such as SAD, SSD, NCC, etc. After calculating C, Lr is calculated by formula (1) or formula (2), and lastly, S is calculated by formula (3). By increasing the number of directions of propagation, the parallax calculation precision increases; however, the calculation processing circuit scale increases (the parallax calculation precision and the processing circuit scale have a tradeoff relationship).

In order to further pursue parallax precision, as illustrated in FIG. 8, a sub-pixel estimation method is used to calculate the decimal parallax. For example, in an equal angle straight line method, three S values corresponding to a parallax D-1, D, and D+1, are used to calculate a decimal parallax D'. Alternatively, in the parabola fitting method, five S values corresponding to a parallax D-2, D-1, D, D+1, D+2 are used to calculate a decimal parallax D'.

Note that a reliability determination is made to determine whether the calculated parallax value is reliable. When it is determined that the parallax value is unreliable, the parallax of the corresponding pixel is assumed to be an invalid parallax.

$$L'_r(p,d) = C(p,d) + \min\left(L'_r(p-r,d),\right.$$
$$L'_r(p-r,d-1) + P_1, L'_r(p-r,d+1) + P_1,$$
$$\left.\min_i L'_r(p-r,i) + P_2\right).$$

$$\cdots (1)$$

L'r : PROPAGATION SIMILARITY

$$L_r(p,d) = C(p,d) + \min\left(L_r(p-r,d),\right.$$
$$L_r(p-r,d-1) + P_1, L_r(p-r,d+1) + P_1,$$
$$\left.\min_i L_r(p-r,i) + P_2\right) - \min_k L_r(p-r,k)$$

$$\cdots (2)$$

Lr : PROPAGATION SIMILARITY

$$S(p,d) = \sum_r L_r(p,d)$$

$$\cdots (3)$$

S : ENERGY CALCULATED BY THE SUM OF PROPAGATION SIMILARITIES PROPAGATED FROM THE RESPECTIVE DIRECTIONS

<Principle of ranging>

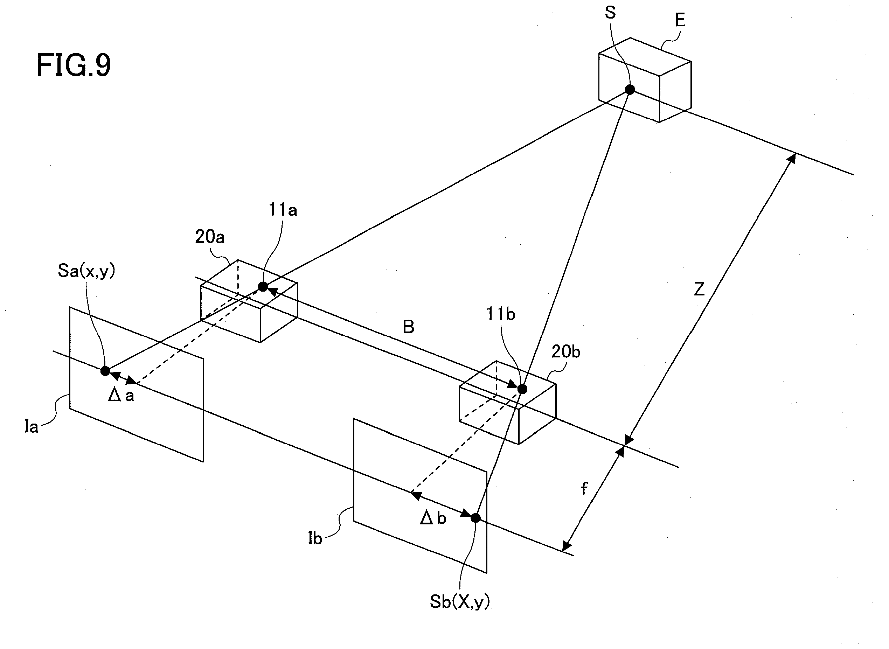

With reference to FIG. 9, the principle of a stereo image method, in which the parallax from the stereo camera to the object is derived, and a parallax value indicative of the parallax is used to measure the distance from the stereo camera to the object, is described. Note that FIG. 9 is a diagram for describing the principle of deriving the distance from the stereo camera 20 to an object. Furthermore, in the following, in order to simplify the description, a description is given in units of one pixel, instead of a predetermined area including a plurality of pixels.

Note that when a process is performed in units of a predetermined area including a plurality of pixels, instead of performing the process in units of one pixel, the predetermined area including the reference pixel is referred to as a reference area, and a predetermined area including a corresponding pixel is referred to as a corresponding area. Furthermore, there may be cases where the reference area includes only the reference pixel, and the corresponding area includes only the corresponding pixel

(Calculation of parallax value)

First, the images captured by the imaging unit 20a and the imaging unit 20b, illustrated in FIG. 9, are respectively referred to as a reference image Ia and a comparative image Ib. Note that in FIG. 9, it is assumed that the imaging unit 20a and the imaging unit 20b are disposed horizontally in parallel and at equal heights. In FIG. 9, the S point on the object E in a three-dimensional space is mapped at a position on the same horizontal line as the imaging unit 20a and the imaging unit 20b. That is, the S point in each image is captured at a point Sa (x, y) in the reference image Ia and at a point Sb (X, y) in the comparative image Ib. In this case, a parallax value $\Delta$ is expressed by the following formula (4), by using Sa (x, y) at coordinates of the imaging unit 20a and Sb (X, y) at coordinates of the imaging unit 20b.

$$\Delta = X - x \quad \ldots (4)$$

Here, in the case of FIG. 9, the parallax value $\Delta$ is obtained as $\Delta = \Delta a + \Delta b$, where $\Delta a$ is the distance between the point Sa (x, y) in the reference image Ia and the intersection point of a perpendicular line from an imaging lens 11a and the image surface, $\Delta b$ is the distance between the point Sb (X, y) in the comparative image Ib and the intersection point of a perpendicular line from an imaging lens 11b and the image surface.

(Calculation of distance)

Furthermore, by using the parallax value Δ, it is possible to derive the distance Z between the object E and the respective imaging units 20a, 20b. Specifically, the distance Z is the distance between a plane, which includes the focal position of the imaging lens 11a and the focal position of the imaging lens 11b, and a specified point S on the object E. As illustrated in FIG. 9, it is possible to calculate the distance Z by the formula (5), by using the focal length f of the imaging lens 11a and the imaging lens 11b, the base line length B that is the length between the imaging lens 11a and the imaging lens 11b, and the parallax value Δ.

$$Z = (B \times f)/\Delta \quad \dots (5)$$

According to this formula (5), the higher the parallax value Δ, the shorter the distance Z, and the lower the parallax value Δ, the longer the distance Z.

<SGM method>

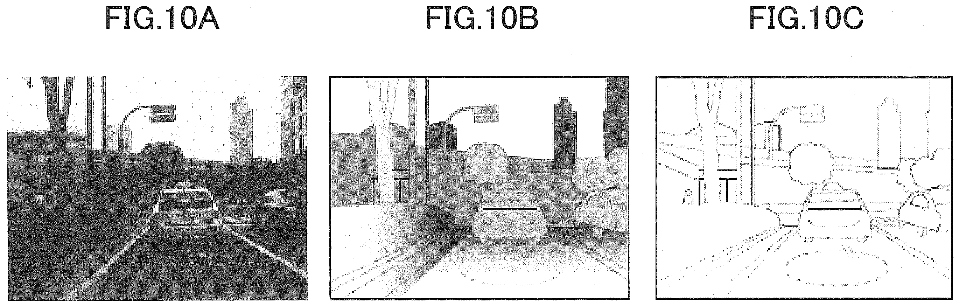

Next, a ranging method using the SGM method is described with reference to FIGS. 10A through 14. Note that FIG. 10A illustrates a reference image, FIG. 10B illustrates a high-density parallax image with respect to FIG. 10A, and FIG. 10C is a conceptual diagram indicating an edge parallax image with respect to FIG. 10A.
Here, a reference image is an image in which the object is indicated by the luminance. A high-density parallax image is an image that is derived from the reference image by the SGM method, and which indicates the parallax values at the respective coordinates in the reference image. The edge parallax image is an image derived by a block matching method used conventionally, and is an image that indicates the parallax values only at the parts where the texture is relatively strong, such as the edge parts, in the reference image.
The SGM method is a method of appropriately deriving the above parallax value with respect to an object having weak texture. For example, the SGM method is a method of deriving the high-density parallax image illustrated in FIG. 10B, based on the reference image illustrated in FIG. 10A. Note that when a block matching method is used, the edge parallax image illustrated in FIG. 10C is derived, based on the reference image illustrated in FIG. 10A. As can be seen by comparing the part surrounded by a dashed-line oval in FIG. 10B and FIG. 10C, in the high-density parallax image, detailed information such as a road, etc., having weak texture can be expressed more clearly than in the edge parallax image, and therefore more detailed distance measurement can be performed with the high-density parallax image.
In the SGM method, the parallax value is not immediately derived after calculating the cost value that is the dissimilarity; instead, after calculating the cost value, a synthesis cost value, which is the synthesis dissimilarity, is calculated to derive the parallax value, and finally, a parallax image (here, a high-density parallax image) indicating the parallax values of all pixels, is derived. Note that the block matching method is the same as the SGM method in terms of calculating the cost value; however, instead of calculating the cost value as in the SGM method, in block matching, only the parallax values of the parts having relatively strong texture such as the edge parts, are derived.

(Calculation of cost value)

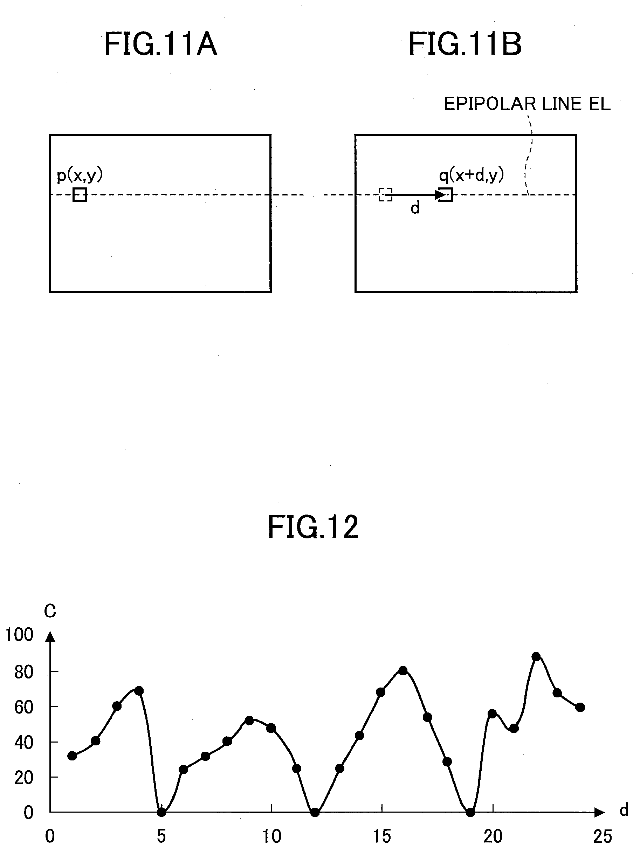

First, a method of calculating the cost value C (p, d) is described with reference to FIGS. 11A through 12. FIG. 11A is a conceptual diagram of a reference pixel in the reference image, and FIG. 11B is a conceptual diagram of the calculation of the shift amount while sequentially shifting the candidate corresponding pixel in the comparative image with respect to the reference image of FIG. 11A. FIG. 12 is a graph indicating the cost value of each shift amount. Here, a corresponding pixel is a pixel in the comparative image, which is most similar to the reference pixel in the reference image. Note that in the following description, it is assumed that C (p, d) expresses C (x, y, d).
As illustrated in FIGS. 11A and 11B, a cost value C (p, d) of each candidate corresponding pixel q (x+d, y) with respect to the reference pixel p (x, y) is calculated, based on the respective luminance values of a predetermined reference pixel p (x, y) in the reference image and a plurality of candidate corresponding pixels q (x+d, y) along an Epipolar line in the comparative image with respect to the reference pixel p (x, y). d is the shift amount of the candidate corresponding pixel q with respect to the reference pixel p, and in the present embodiment, the shift amount is expressed in units of pixels. That is, in FIGS. 11A and 11B, while sequentially shifting a candidate corresponding pixel q (x+d, y) by one pixel at a time within a range specified in advance (for example, 0<d<25), a cost value C (p, d), which is the dissimilarity in the luminance value between the candidate corresponding pixel q (x+d, y) and the reference pixel p (x, y), is calculated. As the method of calculating the cost value C, a publicly known method such as SAD (Sum of Absolute Difference), etc., is applied, when the cost value C indicates the dissimilarity.

The cost value Cs (p, d) calculated as above, can be expressed by a graph of a cost curve that is an assembly of cost values C of the respective shift amounts d, as illustrated in FIG. 12. In FIG. 12, the cost value C is zero when the shift amounts are d=5, 12, 19, and therefore a minimum value cannot be obtained. Accordingly, in the case of an object having weak texture, it is difficult to obtain the minimum value of the cost value C.

(Calculation of synthesis cost value)

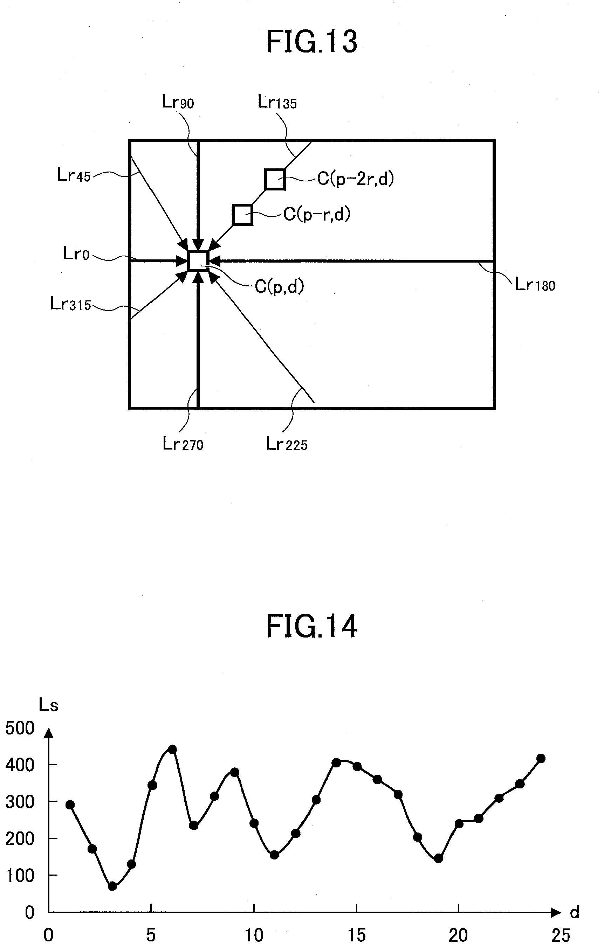

Next, a method of calculating a synthesis cost value Ls (p, d) is described with reference to FIGS. 13 and 14. FIG. 13 is a conceptual diagram of deriving the synthesis cost value. FIG. 14 is a graph of a synthesis cost curve indicating the synthesis cost values of the respective parallax values. The method of calculating the synthesis cost value according to the present embodiment is not only for calculating the cost value C (p, d); this method is also for calculating the synthesis cost value Ls (p, d) by integrating the cost value when a pixel around a predetermined reference pixel p (x, y) is the reference pixel, with the cost value C (p, d) at the reference pixel p (x, y).

Next, a more detailed description is given of the method calculating the synthesis cost value. In order to calculate the synthesis cost value Ls (p, d), first, a route cost value Lr (p, d) needs to be calculated. The formula (6) below is a formula for calculating the route cost value Lr (p, d), and is substantially the same as the above formula (1). The formula (7) below is a formula for calculating the synthesis cost value Ls, and is substantially the same as the above formula (3).

$$Lr(p,d)=C(p,d)+\min\{(Lr(p-r,d),Lr(p-r,d-1)+P1,Lr(p-r,d+1)+P1,Lrmin(p-r)+p2\} \quad …(6)$$

Here, in formula (6), r indicates a direction vector in the integration direction, and includes two components of the x direction and the y direction. min{} is a function for obtaining the minimum value. Lrmin(p-r) indicate the minimum value of Lr(p-r, d) when the shift amount d is changed, at the coordinates to which p is shifted by one pixel in the r direction. Note that Lr is recursively applied as indicated in formula (6). Furthermore, P1 and P2 are fixed parameters defined in advance by experiments; these parameters are set such that the parallax values $\Delta$ of adjacent reference pixels along the route become continuous. For example, P1=48 and P2=96.

Furthermore, as indicated in formula (6), Lr (p, d) is obtained by adding the minimum value of the route cost values Lr of the respective pixels in the r direction illustrated in FIG. 13, to the cost value C at the reference pixel p (x, y). As described above, Lr of each pixel in the r direction is obtained, and therefore Lr is first obtained from the pixel at the very end in the r direction of the reference pixel p (x, y), and the Lr is obtained for subsequent pixels along the r direction.

Then, as illustrated in FIG. 13, $Lr_0$, $Lr_{45}$, $Lr_{90}$, $Lr_{135}$, $Lr_{180}$, $Lr_{225}$, $Lr_{270}$, $Lr_{315}$ of eight directions are obtained, and finally, the synthesis cost value Ls is obtained based on formula (7).

$$L_S(p,d)=\sum_8 L_r \quad \cdots (7)$$

The synthesis cost value Ls (p, d) calculated as described above can be expressed by a graph of a synthesis cost curve, in which the synthesis cost value Ls (p, d) is indicated for each shift amount d, as illustrated in FIG. 14. In FIG. 14, the synthesis cost value Ls is minimum in the case of the shift amount d=3, and therefore this is calculated as a parallax value $\Delta$=3. Note that in the above description, the number of r values is eight; however, the present embodiment is not so limited. For example, the eight directions may be further divided by two to obtain 16 directions, the eight directions may be further divided by three to obtain 24 directions, etc. Furthermore, the cost value C is indicated as the "dissimilarity"; however, the cost value C may be expressed as a "similarity" that is the inverse number of the dissimilarity. In this case, as the method of calculating the cost value C, a publicly known method such as NCC (Normalized Cross Correlation), etc., is applied. Furthermore, in this case, a parallax value $\Delta$ is derived, such that the synthesis cost value Ls is not minimum but "maximum". Note that both the dissimilarity and the similarity may be inclusively expressed as a "matching degree".

Note that part of the process by the processing device may be executed by the ECU, and part of the process by the ECU may be executed by the processing device. Furthermore, there may be a single control system including the functions of both the processing device and the ECU. In this case, the object detection program and the movable body control program may be stored in a single memory.

Furthermore, instead of a memory, another storage medium may be used, such as a hard disk, etc.

Furthermore, the control targets of the movable body control system are the braking device and the operating device of the vehicle; however, the present embodiment is not so limited. For example, the control target may be either one of the braking device or the operating device, and the driving source of the vehicle (for example, the engine and the motor) may be included as at least one of the control targets.

Furthermore, the movable body control system includes a brake control unit and an operation control unit for controlling the vehicle main body; however, instead of or in addition to these units, an alert device may be included for outputting an alert sound or an alert display for prompting the attention of the driver, etc., based on detection information of an object detection device described below.

Furthermore, a random patterned light is projected by turning on the LED array according to a light emitting pattern having an irregular light amount distribution; however, instead of the random patterned light, for example, a "design" represented by a projection mapping video, may be projected in front of the automobile. That is, the light projection device may include an image forming unit for forming an image by light, and emitting the formed light image as a random patterned light. Furthermore, the light projection device may generate and project a random patterned light by emitting light forming a mask pattern having an irregular pattern distribution.

Furthermore, a headlight device is used as the light source unit of the light projection device; however, another exclusive-use light source unit may be provided separately from the headlight device. Furthermore, the headlight device is not limited to a device included as standard equipment in the vehicle main body; the headlight device may be a custom-made article or an optional article.

Furthermore, as the imaging device, a stereo camera 20 including two imaging units (two lenses) is used; however, an imaging device including three or more imaging units may be used.

[Details]

When the headlight switch is turned to the on position from an off position, the light projection control unit 51a described above alternately sends a uniform light pattern and a random light pattern stored in the memory 52 to the headlight, and causes the headlight to alternately project a uniform patterned light and a random patterned light from the headlight.

On the other hand, when the headlight switch is turned to an off position from an on position, the light projection control unit 51a sends a light off trigger signal to the headlight, and ends the light projection from the headlight.

Furthermore, when the light projection control unit 51a sends a random light pattern to the headlight, the light projection control unit 51a sends a random light emission start signal to the CPU 31 via the CPU I/F 53 and the start end signal transfer-use I/F 38.

When the CPU 31 receives the random light emission start signal, the CPU 31 transfers the random light emission start signal to the stereo camera 20 via the stereo camera control-use CPU I/F 32.

When the stereo camera 20 receives the random light emission start signal, the stereo camera 20 captures a predetermined number of image frames with both lenses, and outputs the captured left and right images in units of frames to the image processing unit 33. Then, when the stereo camera 20 has captured a predetermined number of image frames, the stereo camera 20 sends an imaging end signal to the CPU 31 via the stereo camera control-use CPU I/F 32.

When the CPU 31 receives the imaging end signal, the CPU 31 transfers the imaging end signal to the light projection control unit 51a via the start end signal transfer-use I/F 38 and the CPU I/F 53.

When the light projection control unit 51a receives the imaging end signal, the light projection control unit 51a sends a light on trigger signal and a uniform light pattern to the headlight.

Furthermore, when the light projection control unit 51a sends the uniform light pattern to the headlight, the light projection control unit 51a sends a uniform light emission start signal to the CPU 31 via the CPU I/F 53 and the start end signal transfer-use I/F 38.

Here, a "light projection device", which alternately projects a uniform patterned light and a random patterned light, is formed of the headlight device 10 and the light projection control unit 51a. Furthermore, an "imaging system", which obtains an image of an area within a light projection range of the light projection device, is formed of the light projection device and the stereo camera 20. Furthermore, an object detection device, which detects object information from the image obtained by the imaging system, is formed of the imaging system and an image processing system including the image processing unit 33.

Incidentally, generally, when driving the vehicle in a tunnel during daytime, or in a dark place during nighttime, the headlight projects light in front of the vehicle to make the dark place bright; however, the contrast of an object that is originally in a dark place is low, and therefore it is difficult to attain an image contrast, simply by turning on the headlight and emitting uniform light. Therefore, in a dark place, it is difficult to attain matching (correlation) between the left and right images in calculating the parallax, when acquiring a parallax image in front of the vehicle with the stereo camera. As a result, the number of ineffective parallax pixels of a subject in front of the vehicle (a person, another vehicle, an obstacle, the road surface, the background, etc.) increases, and the precision in the output parallax is low.

Accordingly, in the present embodiment, the operation of "projecting light from the headlight" is devised as described below in detail.

For example, the headlight may be turned on and off by manually operating the headlight switch provided near the steering wheel of the vehicle (mode 1), or the headlight may be turned on and off according to control by the ECU 50, that is, automatic control may be implemented on the headlight (mode 2). Note that, in one example, the movable body control system 100 accommodates mode 1.

In mode 1, when the driver or a passenger of the vehicle (hereinafter, "driver, etc.") perceives that the outside of the vehicle is "dark" while the headlight is off, the driver, etc., performs an on operation to the headlight switch (switch from off to on) and turns on the headlight. Specifically, when the ECU 50 receives a light on request signal via a user I/F 80 (see FIG. 5), in accordance with an operation of the headlight switch to the on position, the ECU 50 alternately sends first light pattern data and second light pattern data having different light amount distributions (current value distributions) stored in the memory 52 (see FIG. 5), to the headlight.

In mode 2, when the ECU 50 determines that the outside of the vehicle is "dark" while the headlight is off, the ECU 50 turns on the headlight. Specifically, when the ECU 50 determines that the outside of the vehicle is "dark" based on a detection result from a brightness information detection unit that detects brightness information of the outside of the vehicle, the ECU 50 alternately sends first light pattern data and second light pattern data to the headlight.

Note that the "brightness information detection unit" is formed of the stereo camera 20 and the image processing unit 33 described below for processing images captured by the stereo camera 20; however, for example, the brightness information detection unit may be formed by using a combination of a monocular camera and an image processing unit, or an illuminance sensor. That is, when the brightness information detection unit is formed of the stereo camera 20 and the image processing unit 33, the image processing unit 33 determines that the outside is "dark" when the total value of the luminance of all pixels in the image is less than a threshold. Furthermore, when the brightness information detection unit is an illuminance sensor, the brightness information detection unit determines that the outside is "dark" when the value acquired by the sensor is less than the threshold. As a matter of course, the method of detecting the brightness by the brightness information detection unit may have various modes, as long as the brightness outside the vehicle can be acquired. The detection result of the brightness information detection unit is sent to the ECU 50.

In both modes 1 and 2, while first light pattern data is being sent to the headlight, a first patterned light corresponding to the first light pattern data is projected in front of the vehicle from the headlight, and while second light pattern data is being sent to the headlight, a second patterned light corresponding to the second light pattern data is projected in front of the vehicle from the headlight. That is, when the headlight is turned on, a first patterned light and a second patterned light having different luminance distributions are alternately projected in front of the vehicle, from the headlight. Note that when the driving circuit of the headlight receives the two kinds of light pattern data, the driving circuit of the headlight drives the respective LEDs in the LED array according to a current value set for each LED in the light pattern data.

Furthermore, when a first patterned light and a second patterned light are alternately projected, either one may be projected first (take the lead); however, in either case, when the light pattern data corresponding to the patterned light to be projected first is sent to the headlight, a light on trigger signal is sent together with the light pattern data.

Furthermore, in the case of mode 1, when the driver, etc., perceives that the outside of the vehicle is "bright" while the headlight is on, the driver, etc., operates the headlight switch to the off position (switch from on to off) and turns the headlight off. Specifically, when the ECU 50 receives a light off request signal via the user I/F 80 in accordance with the operation of the headlight switch to the off position, the ECU 50 sends a light off trigger signal to the headlight, and turns off the headlight.

In the case of mode 2, when the ECU 50 determines that the outside of the vehicle is "bright" while the headlight is on, based on a detection result from the brightness information detection unit, the ECU 50 sends a light off trigger signal to the headlight and turns off the headlight.

Here, "first light pattern data" is data having a uniform light amount distribution (current value distribution), and the corresponding "first patterned light" has a uniform luminance distribution. Hereinafter, the "first light pattern data" is also referred to as a "uniform light pattern", and the "first patterned light" is also referred to as a "uniform patterned light". Here, a "uniform luminance distribution" may also be expressed as "without contrast".

Furthermore, "second light pattern data" is data having an irregular light amount distribution (current value distribution), and the corresponding "second patterned light" has an irregular luminance distribution (non-uniform luminance distribution). Hereinafter, the "second light pattern data" is also referred to as a "random light pattern", and the "second patterned light" is also referred to as a "random patterned light".

In the random patterned light, binary or multivalued (ternary or more) luminance parts are distributed in an irregular manner (see FIG. 4).

For example, when the light amount distribution of the random light pattern has binary light amount parts distributed in an irregular manner, the random patterned light has a corresponding distribution with binary luminance parts distributed in an irregular manner.

For example, when the light amount distribution of the random light pattern has multivalued light amount parts distributed in an irregular manner, the random patterned light has a corresponding distribution with multivalued luminance parts distributed in an irregular manner.

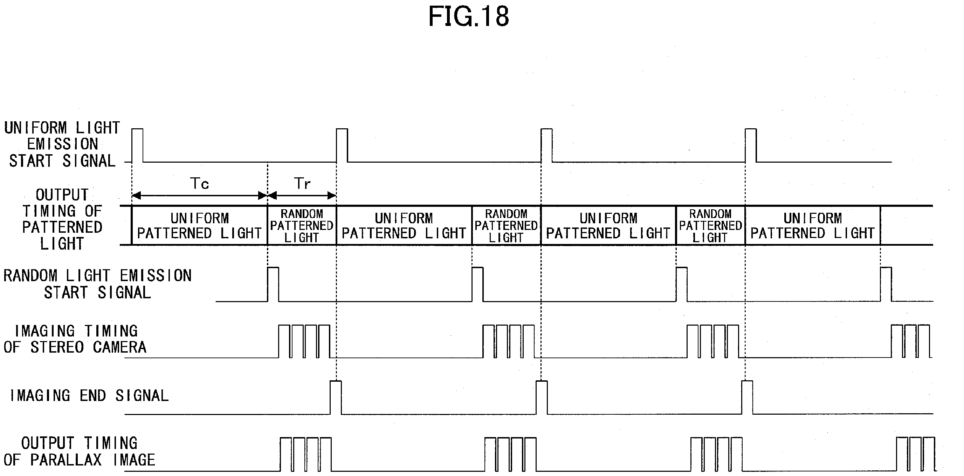

Here, during a time period when the random light pattern is sent to the headlight Tr, that is, the time of projecting the random patterned light Tr, is set to be shorter than the time period when the uniform light pattern is sent to the headlight Tc, that is, the time of projecting the uniform patterned light Tc (see FIG. 18). This is because, in consideration of the visibility of the driver, the time of projecting the random patterned light is preferably shorter than the time of projecting the uniform patterned light. Furthermore, Tr and Tc are both assumed to be fixed. Tr:Tc is preferably approximately 1:2 through 10). Note that Tr:Tc may or may not be an integer ratio. Note that Tc is preferably set according to the time required to generate a parallax image by the image processing unit 33 described below.

Accordingly, when the headlight is turned on, a uniform patterned light having the light projection time Tc and the random patterned light having the light projection time Tr are alternately projected in the light projection range (specifically, respectively projected periodically at different time periods) (see FIG. 18).

Note that, for example, depending on the brightness outside the vehicle, the luminance distribution of the random patterned light (for example, the contrast and the design) may be manually adjusted by the driver, etc., or automatically controlled (for example, the ECU 50 controls the luminance distribution based on a detection result from the brightness information detection unit). Specifically, the darker the outside of the vehicle, the lower the contrast of objects, and therefore the darker the outside of the vehicle, the contrast of the random patterned light may be increased. For example, if a plurality of random light patterns having different light amount distributions are stored in the memory 52, according to need, one of the plurality of random patterned lights having different light amount distributions may be selectively projected.

For example, the plurality of random patterned lights having different light amount distributions may be plurality of random patterned lights having different contrasts and designs, or a plurality of random patterned lights having different designs but the same contrast, or a plurality of random patterned lights having the same design but different contrasts.

While the uniform patterned light and the random patterned light are alternately projected in the light projection range, an image of an object (for example, a person, another vehicle, a structural object, a road, a tree, etc.) in the light projection range may be captured by the stereo camera 20. In this case, the pattern of a uniform patterned light is superimposed on the object in the left and right images captured by both lenses of the stereo camera 20 during the light projection time Tc of the uniform patterned light, and the pattern of a random patterned light is superimposed on the object in the left and right images captured by both lenses of the stereo camera 20 during the light projection time Tr of the random patterned light.

Here, when the object is irradiated with a random patterned light, the texture amount increases, and the contrast becomes high. Meanwhile, even when the object is irradiated with a uniform patterned light, the texture amount and the contrast barely change.

Therefore, by performing parallax calculation by using the left and right images captured by both lenses of the stereo camera 20 during the light projection time Tr of the random patterned light, it becomes easier to attain matching of the left and right images, and the precision in the parallax calculation can be increased.

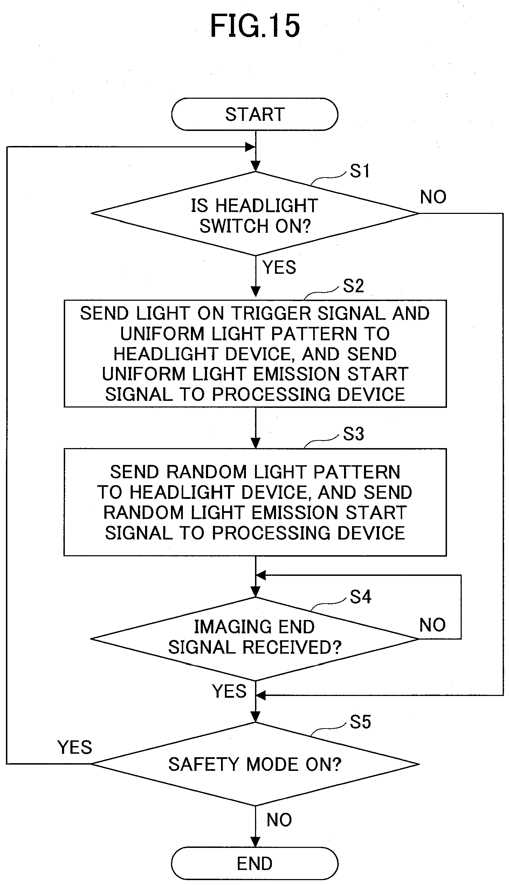

In the following, a "light projection control process 1" performed in the object detection device according to the present embodiment is described with reference to the flowchart of FIG. 15. In the object detection program used for controlling the object detection device, a sub program for operating the light projection device including the headlight device 10, is stored in the memory 52 of the ECU 50. The light projection control process 1 is executed by the light projection control unit 51a in accordance with the sub program stored in the memory 52.

Here, the control is implemented when the driver, etc., selects a safety mode (turns on a danger avoidance mode) at the operation unit of the vehicle 1.

Note that when the safety mode is off, the light projection control unit 51a turns on the headlight according to the uniform light pattern as the driver, etc., operates the headlight switch to the on position, and the light projection control unit 51a turns off the headlight as the driver, etc., operates the headlight switch to the off position.

In the first step S1, the light projection control unit 51a determines whether the headlight switch is on. The determination is affirmative when the light projection control unit 51a receives a light on request signal according to an on operation to the headlight switch, and the determination is negative when the light on request signal is not received. If the determination in step S1 is affirmative, the process shifts to step S2, and if the determination in step S1 is negative, the process shifts to step S5.

In step S2, the light projection control unit 51a sends a light on trigger signal and a uniform light pattern to the headlight device 10, and sends a uniform light emission start signal to the processing device 30. As a result, a uniform patterned light is projected in front of the vehicle from the headlight, and the CPU 31 receives the uniform light emission start signal.

In the next step S3, the light projection control unit 51a sends a random light pattern to the headlight device 10, and sends a random light emission start signal to the processing device 30. As a result, a random patterned light is projected in front of the vehicle from the headlight, and the CPU 31 receives the random light emission start signal.

In the next step S4, the light projection control unit 51a determines whether an imaging end signal has been received. That is, the light projection control unit 51a determines whether the imaging end signals from the stereo camera 20 has been received via the processing device 30. If the determination in step S4 is negative, the same determination is made again. That is, the light projection control unit 51a shifts to a state of "waiting for imaging to end". On the other hand, if the determination is affirmative, the process shifts to step S5.

In step S5, the light projection control unit 51a determines whether the safety mode is on. If the determination in step S5 is affirmative, the process returns to step S1. On the other hand, if the determination in step S5 is negative, the flow ends.

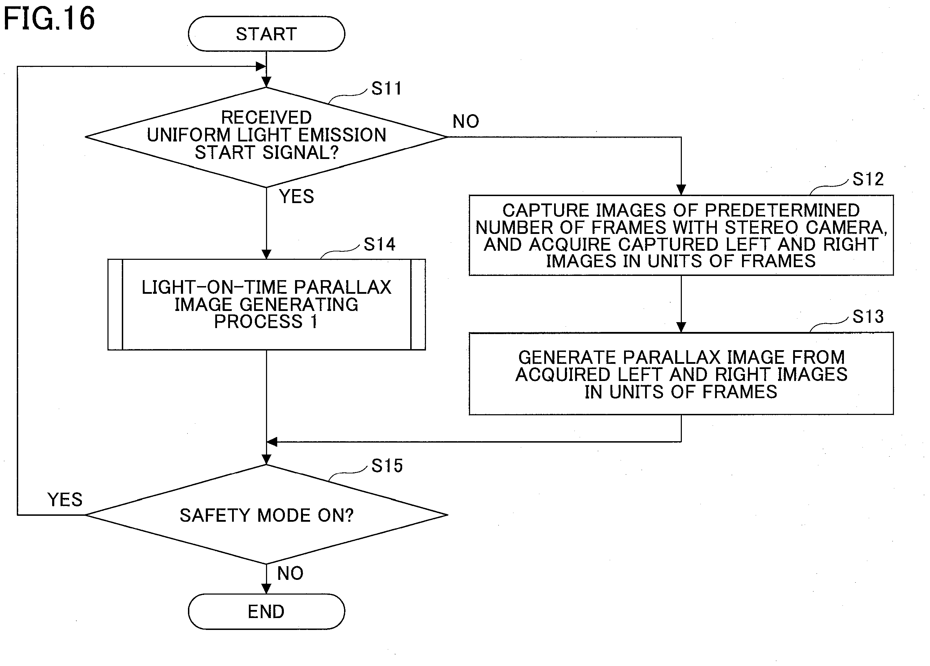

In the following, a parallax image generating process performed in the object detection device according to the present embodiment is described with reference to the flowchart of FIG. 16. In the object detection program used for controlling the object detection device, a sub program for operating the stereo camera 20 and the processing device 30 is stored in the memory 29 of the processing device 30. The parallax image generating process is executed by the processing device 30 in accordance with the sub program. Note that the determinations in the process of FIG. 16 are made by the CPU 31.

Here, the control is implemented when the driver, etc., selects a safety mode (turns on a danger avoidance mode) at the operation unit of the vehicle 1.

In the first step S11, the processing device 30 determines whether a uniform light emission start signal has been received. If the determination in step S11 is negative, the process shifts to step S12. On the other hand, if the determination in step S11 is affirmative, the process shifts to step S14.

In step S12, the stereo camera 20 captures a predetermined number of image frames, and the processing device 30 acquires the captured left and right images in units of frames. That is, here, the left and right images captured by the stereo camera 20 when the headlight is off, are acquired in units of frames.

In the next step S13, the processing device 30 generates a parallax image from the acquired left and right images in units of frames. Specifically, the image processing unit 33 performs a pre-process of gamma correction and distortion correction, and subsequently performs parallax calculation, and sends the luminance images that have undergone the pre-process and a parallax image obtained by the parallax calculation, to the image recognition processing unit 34. When step S13 is executed, the process shifts to step S15.

In step S14, the "light-on-time parallax image generating process 1" described below, is performed. When step S14 is executed, the process shifts to step S15.

In the next step S15, the processing device 30 determines whether the safety mode is on. If the determination in step S15 is negative, the flow ends, and if the determination in step S15 is affirmative, the process returns to step S11.

The image recognition processing unit 34 performs image recognition by using the parallax image generated in the parallax image generating process. Specifically, if a uniform light emission start signal is not received, the image recognition processing unit 34 performs object detection based on a parallax calculation result of a regular parallax image generating process. If a uniform light emission start signal is received, the image recognition processing unit 34 performs object detection by using the result of parallax calculation performed during the time period when a random patterned light is projected, described below. Then, the image recognition processing unit 34 recognizes (detects) information relevant to an object in the light projection range, and sends the result (image recognition result) to the ECU 50. Note that "information relevant to an object" is, for example, whether there is an object, the distance to the object, the type of object (for example, a person, a structural object, a road, etc.), etc. Note that the detection of the type of object can be performed by storing parameters such as the size, the shape, etc., of a plurality of types of objects in the memory 29 in advance, and detecting an object based on the parameters.

Next, the ECU 50 executes various kinds of control (control for avoiding danger), based on the received image recognition result. Specifically, based on the image recognition result, the brake control unit 51b controls the braking device, and the operation control unit 51c controls the operating device.

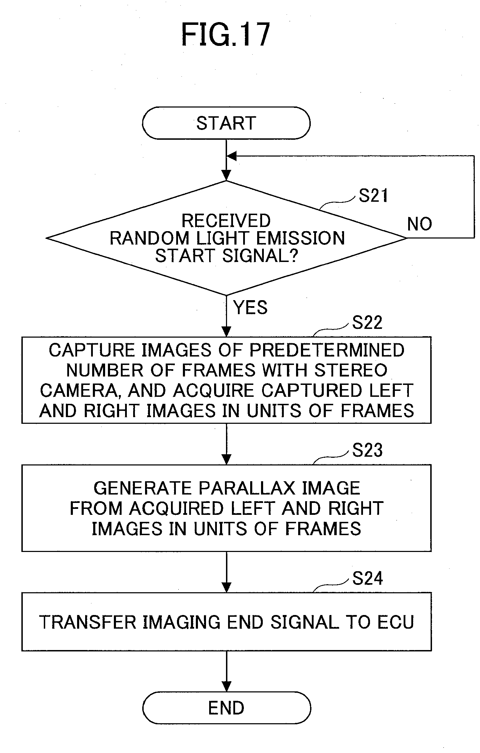

In the following, the "light-on-time parallax image generating process 1" in step S14 of the "parallax image generating process", is described with reference to the flowchart of FIG. 17 and the timing chart of FIG. 18.

In the first step S21, the processing device 30 determines whether a random light emission start signal has been received. If the determination is affirmative, the process shifts to step S22. On the other hand, if the determination is negative, the same determination is made again. That is, the processing device 30 shifts to a state of "waiting for reception".

In step S22, the stereo camera 20 captures a predetermined number of image frames, and the processing device 30 acquires the captured left and right images in units of frames. That is, here, the stereo camera 20 captures a predetermined number of image frames while the random patterned light is projected from the headlight, and the processing device 30 acquires the captured left and right images in units of frames (see FIG. 18).

In the next step S23, the processing device 30 generates a parallax image from the acquired left and right images in units of frames. Specifically, the image processing unit 33 performs a pre-process of gamma correction and distortion correction, and subsequently performs parallax calculation, and sends the luminance images that have undergone the pre-process and a parallax image obtained by the parallax calculation, to the image recognition processing unit 34 (see FIG. 18). When step S23 is executed, the process shifts to step S24.

In step S24, an imaging end signal is transferred to the ECU 50. Specifically, an imaging end signal from the stereo camera 20 is transferred to the light projection control unit 51a (see FIG. 18). When step S24 is executed, the flow ends.

Incidentally, by projecting a random patterned light in front of the vehicle in a dark place, and capturing an image of an area within the range where the light is projected with a stereo camera, it is possible to obtain an image having a contrast applied, which is advantageous for parallax calculation. However, if only a random patterned light continues to be projected, there is always a mixture of bright parts and dark parts in the random patterned light, and therefore the visibility decreases for the driver, which may cause stress of the driver, etc., and may lead to accidents.

The imaging system according to the present embodiment described above is an imaging system that is installed in the vehicle main body, and includes a light projection device including the headlight device 10 and the light projection control unit 51a that projects first and second patterned lights having different luminance distributions at different time periods; and the stereo camera 20 including two imaging units that captures an image of an area within the light projection range of the light projection device.

In this case, it is possible to acquire an image that is advantageous for parallax calculation by which the matching precision of left and right images can be increased, while making the ratio of the light projection time of the random patterned light, with respect to the entire light projection time of the light projection device, to be less than 100%.

As a result, the imaging system according to the present embodiment is capable of obtaining an image that is effective for detecting object information, while avoiding a decrease in visibility.

Furthermore, the light projection device includes a headlight installed in the vehicle main body as the light source unit, and therefore a uniform patterned light and a random patterned light illuminate dark places as illuminating light, and the random patterned light becomes a light effective for parallax calculation. That is, there is no need to provide an exclusively-used light source unit in addition to the headlight.

Furthermore, the light projection time Tr of the random patterned light is shorter than the light projection time Tc of the uniform patterned light, and therefore the decrease in visibility can be further reduced.

Furthermore, the light projection device alternately projects a uniform patterned light and a random patterned light, and therefore it is possible to obtain an image that is advantageous for parallax calculation, between projections of uniform patterned lights.

Furthermore, the light projection device periodically projects a uniform patterned light and a random patterned light, and therefore it is possible to stably and regularly obtain an image that is advantageous for parallax calculation.

Furthermore, the imaging system according to the present embodiment further includes an operation unit for switching between on and off of light projection by the light projection device, and therefore when the driver, etc., perceives that it is "dark", a uniform patterned light and a random patterned light can be alternately projected.

Furthermore, the object detection device according to the present embodiment is installed in the vehicle main body, and includes the imaging system, and the processing device 30 that processes images captured by the imaging system.

In this case, the object information can be detected with high precision from an image that is effective for detecting object information obtained by the imaging system, while avoiding a decrease in the visibility.

Furthermore, the movable body control system 100 according to the present embodiment includes the object detection device, and the ECU 50 (control device) that is installed in the vehicle main body (movable body) and that controls the vehicle main body based on a processing result of the processing device 30 of the object detection device, and therefore it is possible to reduce the possibility of a traveling vehicle main body colliding with an object.

Furthermore, the vehicle 1 (movable body device) includes the movable body control system 100 and the vehicle main body (movable body) in which the movable body control system 100 is installed, and therefore the vehicle 1 has superior safety.

Furthermore, the light projection device according to the present embodiment is a light projection device installed in the vehicle main body, that projects a uniform patterned light and a random patterned light at different time periods, in the imaging range (a range obtained by combining a left lens imaging range and a right lens imaging range, see FIG. 1) of the stereo camera 20 including two imaging units that is installed in the vehicle main body.

In this case, it is possible to acquire an image that is advantageous for parallax calculation by which the matching precision of left and right images can be increased, while making the ratio of the light projection time of the random patterned light with respect to the entire light projection time of the light projection device, to be less than 100%.

As a result, in the light projection device according to the present embodiment, it is possible to increase the detection precision of object information while avoiding a decrease in visibility.

Note that, as can be understood from the above description, the light projection device, the imaging system, and the object detection device according to an embodiment of the present invention are particularly effective when used in a dark environment. These devices do not necessarily need to be installed in a movable body such as a vehicle main body, and these devices are expected to be used in various fields. When these devices are used in various fields other than in a vehicle, a light source unit is used instead of the headlight device 10.

Furthermore, the object detection method using the object detection device according to the present embodiment includes a step of projecting a uniform patterned light in front of the vehicle main body, a step of projecting a random patterned light in front of the vehicle main body, a step of capturing an image of an area within the range in which the random patterned light is projected from a plurality of positions of the movable body, and a step of performing parallax calculation by using a plurality of images separately captured from the plurality of positions in the capturing step.

In this case, it is possible to generate a parallax image by using images that are advantageous for parallax calculation by which the matching precision of left and right images can be increased, while making the ratio of the light projection time of the random patterned light, with respect to the entire light projection time of the light projection device, to be less than 100%.

As a result, it is possible to increase the detection precision of the object information while avoiding a decrease in visibility.

Furthermore, the object detection program used for controlling the object detection device according to the present embodiment, causes a computer to execute the above object detection method, which includes a step of projecting a uniform patterned light in front of the vehicle main body, a step of projecting a random patterned light in front of the vehicle main body, and a step of capturing an image of an area within a range in which random patterned light is projected from a plurality of positions of the vehicle main body.

In this case, it is possible to generate a parallax image by using images that are advantageous for parallax calculation by which the matching precision of left and right images can be increased, while making the ratio of the light projection time of the random patterned light, with respect to the entire light projection time of the light projection device, to be less than 100%.

As a result, it is possible to increase the detection precision of the object information while avoiding a decrease in visibility.

Furthermore, the object detection program according to the present embodiment is divided and stored in two memories 29, 31, and therefore the object detection device can be appropriately operated in accordance with the object detection program.

In the following, a modified example of the above embodiment is described.

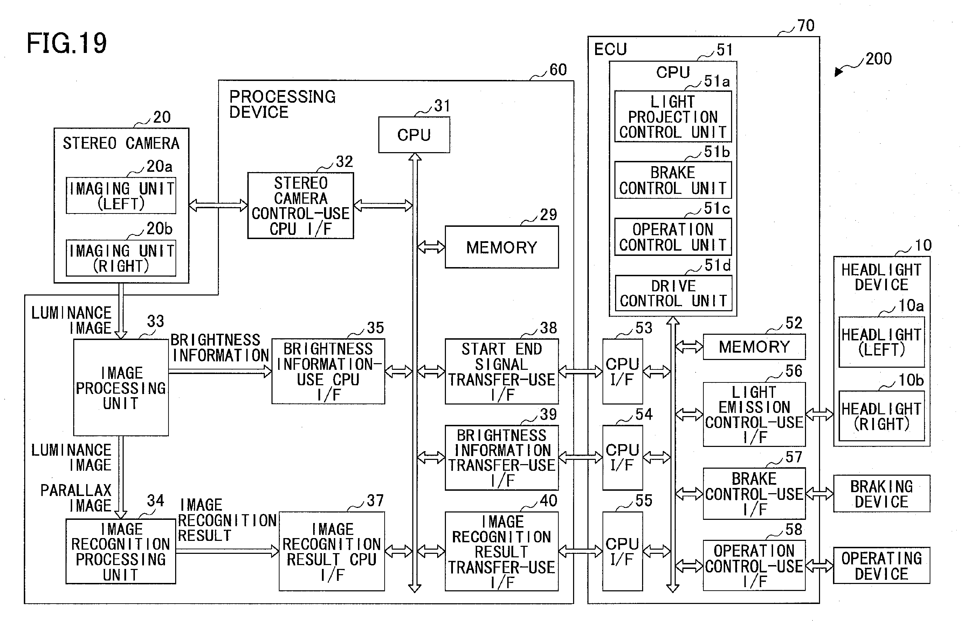

A movable body control system 200 according to a modified example illustrated in FIG. 19 is slightly different from the movable body control system 100 of the above embodiment, in terms of the configurations of the processing device and the ECU. The movable body control system 200 accommodates mode 2.

Specifically, a processing device 60 of the movable body control system 200 includes a brightness information transfer-use I/F 39, in addition to the processing device 30 of the above embodiment. Furthermore, an ECU 70 of the movable body control system 200 includes a CPU I/F 54 in addition to the ECU 50 of the above embodiment.

The image processing unit 33 of the processing device 60 calculates brightness information from an image (luminance image) captured by the stereo camera 20, and sends the brightness information to the CPU 31 via the brightness information-use CPU I/F 35. The CPU 31 sends the received brightness information to the ECU 70 via the brightness information transfer-use I/F 39.

The CPU 51 of the ECU 70 acquires the brightness information from the CPU 31 via the brightness information transfer-use I/F 39 and the CPU I/F 54.

In the movable body control system 200 according to the modified example, the "light projection control process" and the "light-on-time parallax image generating process" in the "parallax image generating process" are different from the above embodiment, and the other processes and control operations are the same as those of the above embodiment.

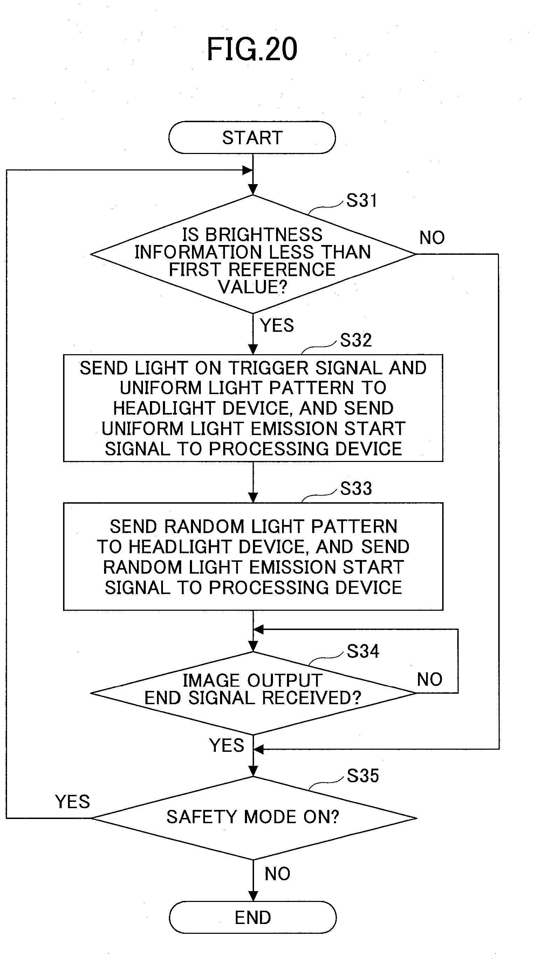

In the following, a light projection control process 2 performed in the object detection device according to the modified example is described with reference to the flowchart of FIG. 20. In the object detection program used for controlling the object detection device, a sub program for operating the light projection device including the headlight device 10, is stored in the memory 52 of the ECU 70. The light projection control process 2 is executed by the light projection control unit 51a in accordance with the sub program.

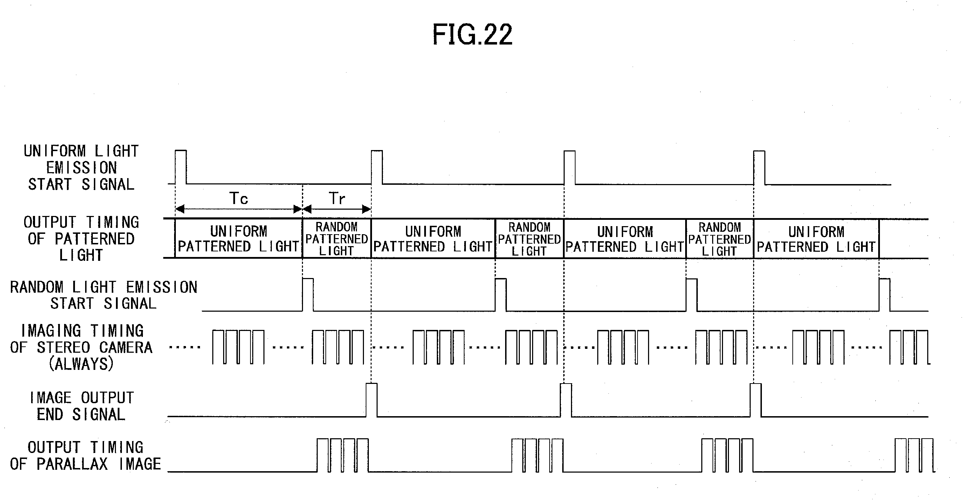

Here, the control is implemented when the driver, etc., selects a safety mode (turns on a danger avoidance mode) at the operation unit of the vehicle 1. When the safety mode is on, the CPU 31 captures images in real-time with the stereo camera 20 (see FIG. 22). Then, the image processing unit 33 calculates brightness information from an image (luminance image) of an area in front of the vehicle captured by the stereo camera 20, and the brightness information is sent to the light projection control unit 51a via the CPU 31 in real-time.

Note that when the safety mode is off, the light projection control unit 51a turns on the headlight according to the uniform light pattern as the driver, etc., performs an on operation to the headlight switch, and turns off the headlight as the driver, etc., performs an off operation to the headlight switch.

In the first step S31, the light projection control unit 51a determines whether the brightness information is less than a reference value set in advance. Here, when the brightness information is less than the reference value, it is generally perceived as "dim" or "dark", and when the brightness information is greater than or equal to the reference value, it is generally perceived as "bright". If the determination in step S31 is negative, the process proceeds to step S35. On the other hand, if the determination in step S31 is affirmative, the process shifts to step S32.

In step S32, the light projection control unit 51a sends a light on trigger signal and a uniform light pattern to the headlight device 10, and sends a uniform light emission start signal to the processing device 60. As a result, a uniform patterned light is projected in front of the vehicle from the headlight, and the CPU 31 receives the uniform light emission start signal.

In the next step S33, the light projection control unit 51a sends a random light pattern to the headlight device 10, and sends a random light emission start signal to the processing device 60. As a result, a random patterned light is projected in front of the vehicle from the headlight, and the CPU 31 receives the random light emission start signal.

In the next step S34, the light projection control unit 51a determines whether an image output end signal has been received. That is, the light projection control unit 51a determines whether the image output end signal from the stereo camera 20 has been received via the processing device 60. If the determination in step S34 is negative, the same determination is made again. That is, the light projection control unit 51a shifts to a state of "waiting for image output to end". On the other hand, if the determination is affirmative, the process shifts to step S35.

In step S35, the light projection control unit 51a determines whether the safety mode is on. If the determination in step S35 is affirmative, the process returns to step S31. On the other hand, if the determination in step S35 is negative, the flow ends.

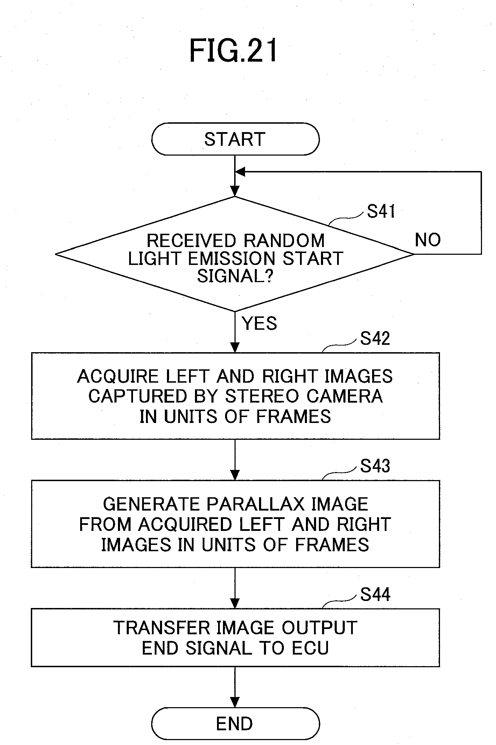

In the following, the "light-on-time parallax image generating process 2" according to modified example, is described with reference to the flowchart of FIG. 21 and the timing chart of FIG. 22. The light-on-time parallax image generating process 2 is also executed in accordance with the sub program stored in the memory 29 by the processing device 60. Note that the determinations in FIG. 21 are made by the CPU 31.

In the first step S41, the processing device 60 determines whether a random light emission start signal has been received. If the determination is affirmative, the process shifts to step S42. On the other hand, if the determination is negative, the same determination is made again. That is, the processing device 60 shifts to a state of "waiting for reception".

In step S42, the stereo camera 20 captures a predetermined number of frames of left and right images. Here, the stereo camera 20 captures images while the random patterned light is projected from the headlight, and the processing device 60 acquires the captured left and right images in units of frames (see FIG. 22).

In the next step S43, the processing device 60 generates a parallax image from the acquired left and right images in units of frames. Specifically, the image processing unit 33 performs a pre-process of gamma correction and distortion correction, and subsequently performs parallax calculation, and outputs the luminance images that have undergone the pre-process and a parallax image obtained by the parallax calculation, to the image recognition processing unit 34 (see FIG. 22). When step S43 is executed, the process shifts to step S44.

In step S44, an image output end signal is transferred to the ECU 70. Specifically, an image output end signal from the stereo camera 20 is transferred to the light projection control unit 51a. When step S44 is executed, the flow ends. Note that when the stereo camera 20 receives the random light emission start signal, the stereo camera 20 outputs the left and right images captured by both lenses to the image processing unit 33 in units of frames. When the predetermined number of image frames of left and right images are output to the image processing unit 33, the stereo camera 20 sends an image output end signal to the CPU 31 via the stereo camera control-use CPU I/F 32.

The object detection device according to the modified example described above, alternately projects a uniform patterned light and a random patterned light when the brightness information indicating the brightness outside the vehicle main body is less than a reference value (predetermined value) set in advance, and performs parallax calculation by using an image captured when a random patterned light is projected, and therefore the parallax image can be generated stably and precisely while avoiding a decrease in the visibility. Note that the contrast of an object that is originally in a bright place is already high, and therefore when the brightness information of the outside of the vehicle is greater than or equal to a reference value (when it is bright), the necessity of projecting a random patterned light is low.

Furthermore, the light projection device acquires the brightness information from the luminance information of the image captured by the stereo camera 20, and therefore compared to a case of separately providing a detection unit exclusively used for detecting the brightness information, it is possible to avoid increasing in the number of components and avoid increasing the cost.

In the following, examples 1 and 2 (parallax calculation method used: SGM algorithm) according to the embodiment and the modified example of the present invention are described (see table 1).

<Example 1> (corresponding to above embodiment)

While the vehicle was traveling, the driver, etc., determined that it is dark, and manually turned the headlight on. A uniform patterned light, and a patterned light to which a non-uniform contrast is applied, were emitted in front the vehicle from the headlight by time division irradiation (alternate irradiation). The driver did not feel bothered or stressed. Furthermore, the number of invalid parallax pixels in front of the vehicle was reduced.

<Example 2> (corresponding to above modified example)

A brightness information detection unit was used. The brightness information detection unit automatically determined that it is dark, automatically turned on the headlight, and a uniform patterned light, and a patterned light to which an non-uniform contrast is applied, were emitted in front the vehicle from the headlight by time division irradiation. The driver did not feel bothered or stressed. Furthermore, the number of invalid parallax pixels in front of the vehicle was reduced.

[Table 1]

| RESULTS OF EXAMPLES 1 AND 2 | | | | |
|---|---|---|---|---|
| | BRIGHTNESS DETECTION | RATIO OF NUMBER OF INVALID PARALLAX PIXELS WITH RESPECT TO NUMBER OF ALL PIXELS | | RESULT |
| | | SGM PARALLAX CALCULATION RESULT WHEN PRESENT INVENTION IS IMPLEMENTED | SGM PARALLAX CALCULATION RESULT WHEN PRESENT INVENTION IS NOT IMPLEMENTED | |
| EXAMPLE 1 | MANUAL OPERATION BY DRIVER | 40% | 65% | NUMBER OF INVALID PARALLAX PIXELS IN FRONT OF VEHICLE DECREASED. DRIVER DID NOT FEEL BOTHERED. |
| EXAMPLE 2 | STEREO CAMERA | 40% | 65% | NUMBER OF INVALID PARALLAX PIXELS IN FRONT OF VEHICLE DECREASED. DRIVER DID NOT FEEL BOTHERED. |

Note that in examples 1 and 2, a stereo camera was used as the brightness information detection unit; however, the brigthness information detection unit is not so limited. For example, a monocular camera, a polarization camera, a laser radar, etc., may be used.

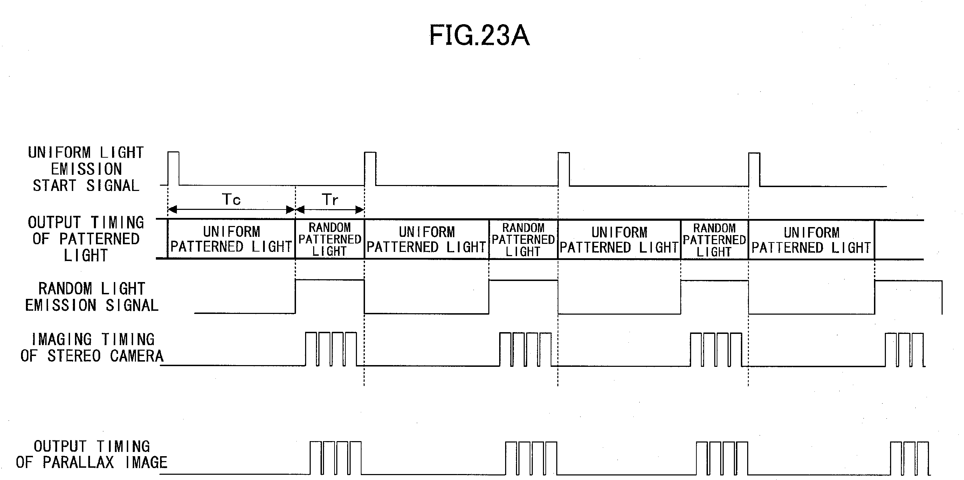

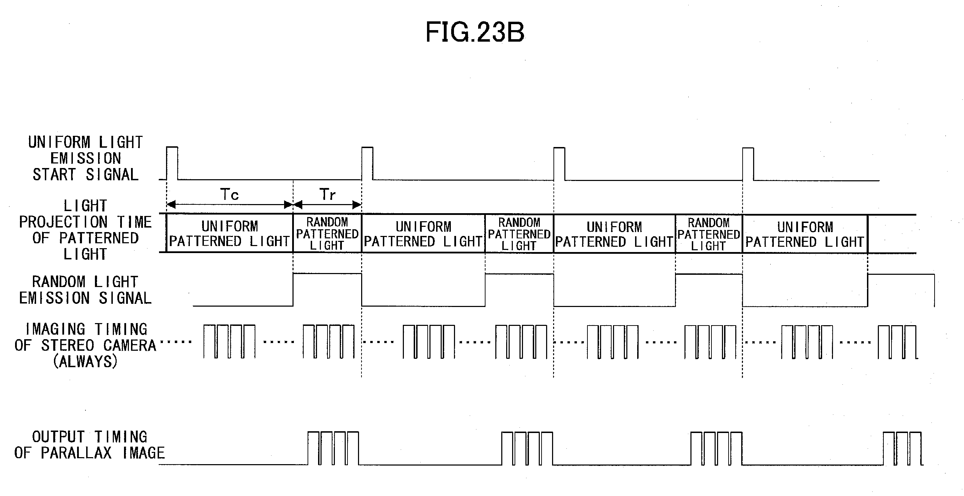

The present embodiment is not milited to the above embodiment or modified example, and may be modified appropriately. For example, in the above embodiment and modified example, a random light emission start signal is sent to the processing device from the ECU; however, instead, as illustrated in FIGS. 23A and 23B, a random light emission signal having a pulse width corresponding to the light projection time Tr of the random patterned light may be sent from the ECU to the processing device, and the stereo camera 20 may capture images or output images only while the random light emission signal is at a high level. Then, in synchronization with the fall of the random light emission signal, the ECU may send a uniform light emission start signal to the processing device and send a light on trigger signal and a uniform light pattern to the headlight device. In this case, there is no need for the stereo camera 20 to output an imaging end signal or an image output end signal.

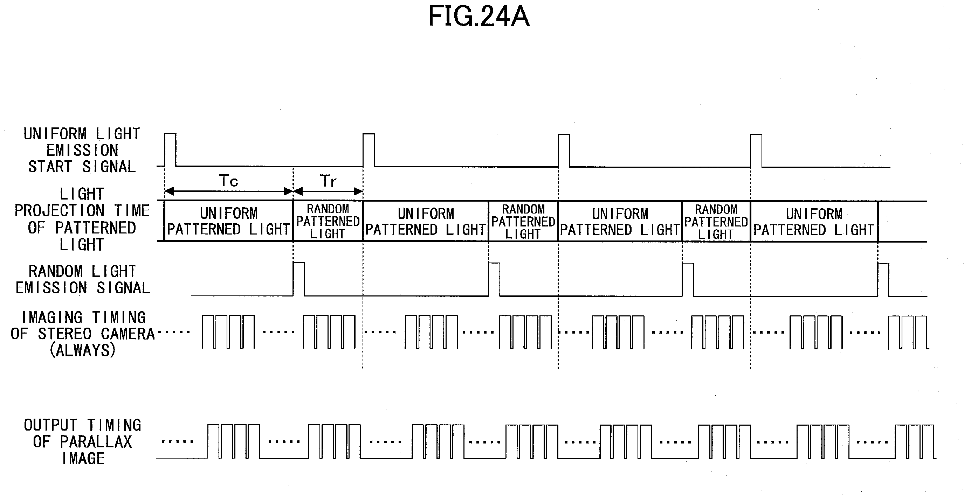

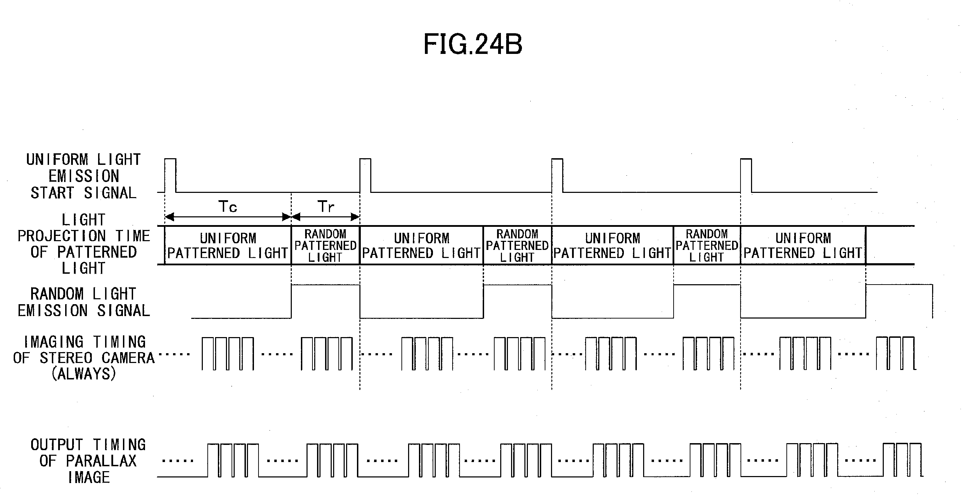

Furthermore, in the above modified example, a parallax image is generated from an image (hereinafter, "former image") captured by the stereo camera 20 while a random patterned light is being projected; however, in addition, as illustrated in FIGS. 24A and 24B, a parallax image may be generated from an image (hereinafter, "latter image") captured by the stereo camera 20 while a uniform patterned light is projected. In this case, image recognition is to be performed by the image recognition processing unit 34 by using the parallax image generated from the former image. In this case, there is no need for the stereo camera 20 to output an imaging end signal or an image output end signal. Note that the parallax image generated from the former image, is a parallax image generated during a time period from when the random light emission start signal or the random light emission signal rises, to when the next uniform light emission start signal rises.

Furthermore, in the above embodiment and modified example, the first patterned light is the uniform patterned light and the second patterned light is the random patterned light.

Furthermore, in the above embodiment and modified example, as the second patterned light, a random patterned light having an irregular luminance distribution is used.

Furthermore, in the above embodiment and modified example, as the first patterned light, a uniform patterned light having a uniform luminance distribution is used.

Furthermore, in the above embodiment and modified example, Tr<Tc is satisfied; however, Tr≥Tc may is also applicable. Furthermore, Tr and Tc may be variable.

The embodiments of the present invention are capable of obtaining an image that is effective for detecting object information, while avoiding a decrease in the visibility.

**Claims**

1. A vehicle main body (1) in which an imaging system is installed, the imaging system comprising:

   a light projection device (10) configured to project, at different time periods, a first patterned light having a uniform luminance distribution and a second patterned light having a non-uniform luminance distribution; and
   an imaging device (20) that includes a plurality of imaging units (20a, 20b) configured to capture an image of an area within a light projection range of the light projection device,
   wherein
   the light projection device (10) includes a headlight installed in the vehicle main body (1) as a light source unit which projects the first patterned light and the second patterned light.

2. The vehicle main body (1) according to claim 1, wherein
   the second patterned light has an irregular luminance distribution.

3. The vehicle main body (1) according to any one of claims 1 through 2, wherein
   a light projection time of the second patterned light is shorter than a light projection time of the first patterned light.

4. The vehicle main body (1) according to any one of claims 1 through 3, wherein
   the light projection device (10) is configured to alternately project the first patterned light and the second patterned light.

5. The vehicle main body (1) according to claim 4, wherein
   the light projection device (10) is configured to periodically project the first patterned light and the second patterned light.

6. The vehicle main body (1) according to any one of claims 1 through 5, further comprising:
   an operation unit (50) configured to switch between on and off of light projection by the light projection device (10).

7. The vehicle main body (1) according to any one of claims 1 through 6, wherein
   the light projection device (10) is configured to project light when a detection result, which is obtained by a brightness information detection unit configured to detect brightness information that indicates brightness outside the movable body (1), is less than a predetermined value.

8. The vehicle main body (1) according to any one of claims 1 through 7 comprising
   a processing device configured to process the image captured by the imaging device (20) of the imaging system.

9. The vehicle main body (1) according to claim 8, wherein
   the processing device is configured to perform parallax calculation based on a plurality of the images respectively captured by the plurality of imaging units (20a, 20b) during a time period when the second patterned light is projected.

10. The vehicle main body (1) according to claim 10, wherein
    the processing device is configured to perform object detection by using a result of the parallax calculation.

11. An object detection method comprising:

    projecting, using a light projection device (10) and at different time periods, a first patterned light having a uniform luminance distribution, in front of a vehicle main body (1) and
    a second patterned light having a non-uniform luminance distribution, in front of the vehicle main body (1);
    capturing, from a plurality of positions of the vehicle main body (1), an image of an area within a range in which the second patterned light is projected; and
performing parallax calculation by using a plurality of the captured images separately captured from the plurality of positions of the vehicle main body (1),
wherein
the light projection device (10) includes a headlight installed in the vehicle main body (1) as a light source unit which projects the first patterned light and the second patterned light.

**Patentansprüche**

1. Hauptkörper (1) eines Fahrzeuges, in welchen ein Abbildungssystem eingebaut ist, wobei das Abbildungssystem aufweist:

   eine Licht projizierende Einrichtung (10), die konfiguriert ist, um zu verschiedenen Zeitperioden ein erstes gemustertes Licht, das eine gleichmäßige Luminanzverteilung hat, und ein zweites gemustertes Licht zu projizieren, das eine ungleichmäßig Luminanzverteilung hat; und
   eine Abbildungseinrichtung (20), die mehrere Abbildungseinheiten (20a, 20b) enthält, die konfiguriert sind, um ein Bild von einem Bereich innerhalb eines Lichtprojektionsbereiches von der Licht projizierenden Einrichtung aufzunehmen, wobei
   die Licht projizierende Einrichtung (10) einen Scheinwerfer enthält, der in dem Hauptkörper (1) des Fahrzeugs als eine Lichtquelleneinheit eingebaut ist, welche das erste gemusterte Licht und das zweite gemusterte Licht projiziert.

2. Hauptkörper (1) eines Fahrzeuges gemäß Anspruch 1, wobei
   das zweite gemusterte Licht eine unregelmäßige Luminanzverteilung hat.

3. Hauptkörper (1) eines Fahrzeuges gemäß irgendeinem der Ansprüche 1 bis 2, wobei
   eine Projektionszeit des Lichtes von dem zweiten gemusterten Licht kürzer als eine Projektionszeit des Lichtes von dem ersten gemusterten Licht ist.

4. Hauptkörper (1) eines Fahrzeuges gemäß irgendeinem der Ansprüche 1 bis 3, wobei die Licht projizierende Einrichtung (10) konfiguriert ist, um abwechselnd das erste gemusterte Licht und das zweite gemusterte Licht zu projizieren.

5. Hauptkörper (1) eines Fahrzeuges gemäß Anspruch 4, wobei die Licht projizierende Einrichtung (10) konfiguriert ist, um periodisch das erste gemusterte Licht und das zweite gemusterte Licht zu projizieren.

6. Hauptkörper (1) eines Fahrzeuges gemäß irgendeinem der Ansprüche 1 bis 5, der ferner aufweist:
   eine Betriebseinheit (50), die konfiguriert ist, um zwischen einer Ein- und Ausschaltung von der Lichtprojektion durch die Licht projizierende Einrichtung (10) zu schalten.

7. Hauptkörper (1) eines Fahrzeuges gemäß irgendeinem der Ansprüche 1 bis 6, wobei
   die Licht projizierende Einrichtung (10) konfiguriert ist, um Licht zu projizieren, wenn ein Erfassungsergebnis, welches durch eine Erfassungseinheit für eine Helligkeitsinformation erhalten wird, die konfiguriert ist, um Helligkeitsinformationen zu erfassen, die eine Helligkeit außerhalb des bewegbaren Körpers (1) anzeigten, geringer als ein vorbestimmter Wert ist.

8. Hauptkörper (1) eines Fahrzeuges gemäß irgendeinem der Ansprüche 1 bis 7, der aufweist
   eine Verarbeitungseinrichtung, die konfiguriert ist, um das Bild zu verarbeiten, das durch die Abbildungseinrichtung (20) des Abbildungssystems aufgenommen wird.

9. Hauptkörper (1) eines Fahrzeuges gemäß Anspruch 8, wobei die Verarbeitungseinrichtung konfiguriert ist, um eine Berechnung der Parallaxe auf der Grundlage von mehreren der Bilder zu berechnen, die jeweils durch die mehreren der Abbildungseinheiten (20a, 20b) während einer Zeitperiode aufgenommen werden, wenn das zweite gemusterte Licht projiziert wird.

10. Hauptkörper (1) eines Fahrzeuges gemäß Anspruch 10, wobei
    die Verarbeitungseinrichtung konfiguriert ist, um eine Objekterfassung unter Verwendung eines Ergebnisses der Berechnung der Parallaxe durchzuführen.

11. Verfahren zur Erfassung eines Objektes, das aufweist:

unter Verwendung einer Licht projizierenden Einrichtung (10) und zu verschiedenen Zeitperioden wird ein erstes gemustertes Licht, das eine gleichmäßige Luminanzverteilung hat, vor einen Hauptkörper (1) eines Fahrzeuges projiziert,
ein zweites gemustertes Licht, das eine ungleichmäßige Luminanzverteilung hat, wird vor den Hauptkörper (1) des Fahrzeuges projiziert;
aus mehreren Positionen des Hauptkörpers (1) des Fahrzeuges wird ein Bild von einem Bereich innerhalb eines Bereiches, in welchen das zweite gemusterte Licht projiziert wird, aufgenommen; und
eine Berechnung einer Parallaxe wird unter Verwendung von mehreren der aufgenommenen Bilder, die getrennt von den mehreren Positionen des Hauptkörpers (1) des Fahrzeuges aufgenommen werden, durchgeführt, wobei die Licht projizierende Einrichtung (10) einen Scheinwerfer enthält, der in den Hauptkörper (1) des Fahrzeuges als eine Lichtquelleneinheit eingebaut ist, welche das erste gemusterte Licht und das zweite gemusterte Licht projiziert.

**Revendications**

1. Carrosserie principale de véhicule (1) dans laquelle un système d'imagerie est installé, le système d'imagerie comprenant :

un dispositif de projection de lumière (10) configuré pour projeter, à différentes périodes, une première lumière à motif ayant une distribution de luminance uniforme et une seconde lumière à motif ayant une distribution de luminance non uniforme ; et
un dispositif d'imagerie (20) qui inclut une pluralité d'unités d'imagerie (20a, 20b) configurées pour capturer une image d'une zone au sein d'une portée de projection de lumière du dispositif de projection de lumière,
dans laquelle le dispositif de projection de lumière (10) inclut un phare installé dans la carrosserie principale de véhicule (1) en tant qu'unité de source de lumière qui projette la première lumière à motif et la seconde lumière à motif.

2. Carrosserie principale de véhicule (1) selon la revendication 1, dans laquelle
la seconde lumière à motif a une distribution de luminance irrégulière.

3. Carrosserie principale de véhicule (1) selon l'une quelconque des revendications 1 à 2, dans laquelle
un temps de projection de lumière de la seconde lumière à motif est plus court qu'un temps de projection de lumière de la première lumière à motif.

4. Carrosserie principale de véhicule (1) selon l'une quelconque des revendications 1 à 3, dans laquelle
le dispositif de projection de lumière (10) est configuré pour projeter de façon alternée la première lumière à motif et la seconde lumière à motif.

5. Carrosserie principale de véhicule (1) selon la revendication 4, dans laquelle
le dispositif de projection de lumière (10) est configuré pour projeter périodiquement la première lumière à motif et la seconde lumière à motif.

6. Carrosserie principale de véhicule (1) selon l'une quelconque des revendications 1 à 5, comprenant en outre :
une unité de fonctionnement (50) configurée pour commuter entre l'allumage et l'arrêt de projection de lumière par le dispositif de projection de lumière (10).

7. Carrosserie principale de véhicule (1) selon l'une quelconque des revendications 1 à 6, dans laquelle
le dispositif de projection de lumière (10) est configuré pour projeter de la lumière lorsqu'un résultat de détection, qui est obtenu par une unité de détection d'informations de luminosité configurée pour détecter des informations de luminosité qui indiquent une luminosité à l'extérieur de la carrosserie mobile (1), est inférieure à une valeur prédéterminée.

8. Carrosserie principale de véhicule (1) selon l'une quelconque des revendications 1 à 7, comprenant

un dispositif de traitement configuré pour traiter l'image capturée par le dispositif d'imagerie (20) du système d'imagerie.

9. Carrosserie principale de véhicule (1) selon la revendication 8, dans laquelle le dispositif de traitement est configuré pour réaliser un calcul de parallaxe sur la base d'une pluralité des images respectivement capturées par la pluralité d'unités d'imagerie (20a, 20b) durant une période lorsque la seconde lumière à motif est projetée.

10. Carrosserie principale de véhicule (1) selon la revendication 10, dans laquelle le dispositif de traitement est configuré pour réaliser une détection d'objet en utilisant un résultat du calcul de parallaxe.

11. Procédé de détection d'objet, comprenant :

la projection, en utilisant un dispositif de projection de lumière (10) et à différentes périodes, d'une première lumière à motif ayant une distribution de luminance uniforme, devant une carrosserie principale de véhicule (1) et d'une seconde lumière à motif ayant une distribution de luminance non uniforme, devant la carrosserie principale de véhicule (1) ;
la capture, depuis une pluralité de positions de la carrosserie principale de véhicule (1), d'une image d'une zone au sein d'une portée au sein de laquelle la seconde lumière à motif est projetée ; et
la réalisation d'un calcul de parallaxe en utilisant une pluralité des images capturées séparément capturées depuis la pluralité de positions de la carrosserie principale de véhicule (1),
dans lequel
le dispositif de projection de lumière (10) inclut un phare installé dans la carrosserie principale de véhicule (1) en tant qu'unité de source de lumière qui projette la première lumière à motif et la seconde lumière à motif.

# FIG.1

UNIFORM/
RANDOM
PATTERNED
LIGHT

LIGHT
PROJECTION
RANGE

UNIFORM/
RANDOM
PATTERNED
LIGHT

LEFT LENS
IMAGING RANGE

RIGHT LENS
IMAGING RANGE

10a 10b
10
HEADLIGHT HEADLIGHT

20a 20b
STEREO 20
CAMERA

1

TRAVELLING
DIRECTION
OF VEHICLE

# FIG.2A

# FIG.2B

## FIG.3

## FIG.4

# FIG.5

EP 3 070 641 B1

## FIG.6

PARALLAX IMAGE GENERATING UNIT

# FIG.7

# FIG.8

DISSIMILARITY
(MORE SIMILAR
AS DISSIMILARITY
IS LOWER)

$S(p,d)$

$d$(@TARGET PIXEL)

D-3   D-2   D-1   D   D+1   D+2

DECIMAL PARALLAX D'
AFTER SUB-PIXEL ESTIMATION

# FIG.9

EP 3 070 641 B1

FIG.10A  FIG.10B  FIG.10C

# FIG.11A

# FIG.11B

# FIG.12

# FIG.13

# FIG.14

EP 3 070 641 B1

# FIG.15

```
              START

                │
    ┌───────────▼
    │          ╱S1
    │    ◇ IS HEADLIGHT ◇────NO──┐
    │      SWITCH ON?            │
    │          │                 │
    │         YES                │
    │          │  ╱S2            │
    │  ┌───────▼────────┐        │
    │  │ SEND LIGHT ON  │        │
    │  │ TRIGGER SIGNAL │        │
    │  │ AND UNIFORM    │        │
    │  │ LIGHT PATTERN  │        │
    │  └───────┬────────┘        │
```

SEND LIGHT ON TRIGGER SIGNAL AND
UNIFORM LIGHT PATTERN TO
HEADLIGHT DEVICE, AND SEND
UNIFORM LIGHT EMISSION START
SIGNAL TO PROCESSING DEVICE

S3

SEND RANDOM LIGHT PATTERN
TO HEADLIGHT DEVICE, AND SEND
RANDOM LIGHT EMISSION START
SIGNAL TO PROCESSING DEVICE

S4

IMAGING END SIGNAL RECEIVED?  NO

YES

S5

SAFETY MODE ON?   YES / NO

END

31

# FIG.16

START

S11 — RECEIVED UNIFORM LIGHT EMISSION START SIGNAL?

NO → S12 — CAPTURE IMAGES OF PREDETERMINED NUMBER OF FRAMES WITH STEREO CAMERA, AND ACQUIRE CAPTURED LEFT AND RIGHT IMAGES IN UNITS OF FRAMES

YES → S14 — LIGHT-ON-TIME PARALLAX IMAGE GENERATING PROCESS 1

S13 — GENERATE PARALLAX IMAGE FROM ACQUIRED LEFT AND RIGHT IMAGES IN UNITS OF FRAMES

S15 — SAFETY MODE ON?

YES

NO → END

EP 3 070 641 B1

# FIG.17

```
                    ┌──────────────────┐
                    │      START       │
                    └──────────────────┘
                              │
                              ▼
                           ╱────╲
                         ╱        ╲           S21
                       ╱            ╲
                     ╱   RECEIVED     ╲      NO
                   ◄ RANDOM LIGHT EMISSION ├──────┐
                     ╲  START SIGNAL?  ╱          │
                       ╲            ╱             │
                         ╲        ╱               │
                           ╲────╱                 │
                              │                   │
                             YES                  │
                              │         S22       │
                              ▼                   │
        ┌────────────────────────────────────┐   │
        │  CAPTURE IMAGES OF PREDETERMINED    │   │
        │  NUMBER OF FRAMES WITH STEREO       │   │
        │  CAMERA, AND ACQUIRE CAPTURED LEFT  │   │
        │  AND RIGHT IMAGES IN UNITS OF FRAMES│   │
        └────────────────────────────────────┘   │
                              │         S23       │
                              ▼                   │
        ┌────────────────────────────────────┐   │
        │     GENERATE PARALLAX IMAGE         │   │
        │   FROM ACQUIRED LEFT AND RIGHT      │   │
        │     IMAGES IN UNITS OF FRAMES       │   │
        └────────────────────────────────────┘   │
                              │         S24       │
                              ▼                   │
        ┌────────────────────────────────────┐   │
        │  TRANSFER IMAGING END SIGNAL TO ECU │   │
        └────────────────────────────────────┘   │
                              │                   │
                              ▼                   │
                    ┌──────────────────┐          │
                    │       END        │          │
                    └──────────────────┘          │
```

# FIG.18

# FIG.19

EP 3 070 641 B1

# FIG.20

```
          ┌─────────────┐
          │    START    │
          └──────┬──────┘
                 │
    ┌────────────▼─────────────┐        S31
    │      IS BRIGHTNESS        │
    │   INFORMATION LESS THAN   │──── NO ───┐
    │     FIRST REFERENCE       │           │
    │         VALUE?            │           │
    └────────────┬─────────────┘           │
                YES         S32             │
    ┌────────────▼─────────────┐           │
    │ SEND LIGHT ON TRIGGER SIGNAL AND     │
    │  UNIFORM LIGHT PATTERN TO            │
    │  HEADLIGHT DEVICE, AND SEND          │
    │  UNIFORM LIGHT EMISSION START        │
    │  SIGNAL TO PROCESSING DEVICE         │
    └────────────┬─────────────┘           │
                         S33               │
    ┌────────────▼─────────────┐           │
    │  SEND RANDOM LIGHT PATTERN           │
    │  TO HEADLIGHT DEVICE, AND SEND       │
    │  RANDOM LIGHT EMISSION START         │
    │  SIGNAL TO PROCESSING DEVICE         │
    └────────────┬─────────────┘           │
                 │                S34       │
    ┌────────────▼─────────────┐           │
    │      IMAGE OUTPUT         │── NO ──┐  │
    │   END SIGNAL RECEIVED?    │        │  │
    └────────────┬─────────────┘        │  │
                YES ◄───────────────────┘◄─┘
                 │            S35
    ┌────────────▼─────────────┐
YES │      SAFETY MODE ON?      │
 ───┤                          │
    └────────────┬─────────────┘
                NO
          ┌──────▼──────┐
          │     END     │
          └─────────────┘
```

START

S31
IS BRIGHTNESS INFORMATION LESS THAN FIRST REFERENCE VALUE? — NO / YES

S32
SEND LIGHT ON TRIGGER SIGNAL AND UNIFORM LIGHT PATTERN TO HEADLIGHT DEVICE, AND SEND UNIFORM LIGHT EMISSION START SIGNAL TO PROCESSING DEVICE

S33
SEND RANDOM LIGHT PATTERN TO HEADLIGHT DEVICE, AND SEND RANDOM LIGHT EMISSION START SIGNAL TO PROCESSING DEVICE

S34
IMAGE OUTPUT END SIGNAL RECEIVED? — NO / YES

S35
SAFETY MODE ON? — YES / NO

END

# FIG.21

```
              ┌─────────────┐
              │    START    │
              └──────┬──────┘
                     │ ◄─────────────────────┐
                     ▼                        │
                  ╱─────╲        S41          │
               ╱  RECEIVED RANDOM  ╲    NO    │
              ◄  LIGHT EMISSION START  ├──────┘
               ╲     SIGNAL?    ╱
                  ╲─────╱
                     │ YES
                     ▼         S42
        ┌─────────────────────────────┐
        │  ACQUIRE LEFT AND RIGHT IMAGES │
        │  CAPTURED BY STEREO CAMERA     │
        │     IN UNITS OF FRAMES         │
        └───────────────┬───────────────┘
                        │         S43
                        ▼
        ┌─────────────────────────────┐
        │   GENERATE PARALLAX IMAGE      │
        │  FROM ACQUIRED LEFT AND RIGHT  │
        │    IMAGES IN UNITS OF FRAMES   │
        └───────────────┬───────────────┘
                        │         S44
                        ▼
        ┌─────────────────────────────┐
        │    TRANSFER IMAGE OUTPUT       │
        │     END SIGNAL TO ECU          │
        └───────────────┬───────────────┘
                        ▼
                 ┌─────────────┐
                 │     END     │
                 └─────────────┘
```

37

# FIG.22

UNIFORM LIGHT
EMISSION
START SIGNAL

Tc    Tr

OUTPUT TIMING
OF PATTERNED
LIGHT

| UNIFORM PATTERNED LIGHT | RANDOM PATTERNED LIGHT | UNIFORM PATTERNED LIGHT | RANDOM PATTERNED LIGHT | UNIFORM PATTERNED LIGHT | RANDOM PATTERNED LIGHT | UNIFORM PATTERNED LIGHT |
|---|---|---|---|---|---|---|

RANDOM LIGHT EMISSION
START SIGNAL

IMAGING TIMING
OF STEREO CAMERA
(ALWAYS)

IMAGE OUTPUT
END SIGNAL

OUTPUT TIMING
OF PARALLAX IMAGE

EP 3 070 641 B1

# FIG.23A

EP 3 070 641 B1

# FIG.23B

UNIFORM LIGHT
EMISSION
START SIGNAL

LIGHT
PROJECTION TIME
OF PATTERNED
LIGHT

$T_c$  $T_r$

| UNIFORM PATTERNED LIGHT | RANDOM PATTERNED LIGHT | UNIFORM PATTERNED LIGHT | RANDOM PATTERNED LIGHT | UNIFORM PATTERNED LIGHT | RANDOM PATTERNED LIGHT | UNIFORM PATTERNED LIGHT |

RANDOM LIGHT
EMISSION SIGNAL

IMAGING TIMING
OF STEREO CAMERA
(ALWAYS)

OUTPUT TIMING
OF PARALLAX IMAGE

EP 3 070 641 B1

# FIG.24A

EP 3 070 641 B1

## FIG.24B

**EP 3 070 641 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013190394 A
- US 2011026773 A1
- US 2014028805 A1
- US 2012176380 A1
- US 6709116 B1
- US 2014376003 A1
- US 2010259598 A1